(19) **Europäisches Patentamt / European Patent Office / Office européen des brevets**

(11) **EP 4 699 995 A1**

(12) # EUROPEAN PATENT APPLICATION

(43) Date of publication:
**25.02.2026 Bulletin 2026/09**

(21) Application number: **25210603.4**

(22) Date of filing: **10.05.2022**

(51) International Patent Classification (IPC):
**C04B 2/12** (2006.01)    **F27B 1/02** (2006.01)
**F27B 1/00** (2006.01)

(52) Cooperative Patent Classification (CPC):
(C-Sets available)
**C04B 2/12; F27B 1/005;** Y02P 40/40    (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2021 EP 21173260**
**11.05.2021 EP 21173263**
**16.09.2021 EP 21197039**
**16.09.2021 EP 21197038**
**13.12.2021 EP 21214125**
**13.12.2021 EP 21214127**

(62) Document number(s) of the earlier application(s) in accordance with Art. 76 EPC:
**22729057.4 / 4 337 621**

(71) Applicant: **Carmeuse Technologies**
**1348 Louvain-la-Neuve (BE)**

(72) Inventors:
• **THIBEAUMONT, Etienne**
**4530 VILLERS-LE-BOUILLET (BE)**
• **AUBERT, Alex**
**1083 GANSHOREN (BE)**
• **CAMBIER, Pierre-Olivier**
**1320 HAMME-MILLE (BE)**
• **ROBIN, Charles**
**5340 FAULX-LES-TOMBES (BE)**

(74) Representative: **AWA Benelux**
**Parc d'affaires Zénobe Gramme - Bât. K**
**Square des Conduites d'Eau 1-2**
**4020 Liège (BE)**

Remarks:
This application was filed on 23.10.2025 as a divisional application to the application mentioned under INID code 62.

(54) **DECARBONATION PROCESS OF CARBONATED MATERIALS IN A MULTI-SHAFT VERTICAL KILN**

(57)    The present invention discloses a decarbonation process of carbonated materials, in particular limestone and dolomitic limestone, with $CO_2$ recovery in a multi-shaft vertical kiln (MSVK) comprising a first, a second, and optionally a third shaft with preheating, heating and cooling zones and a cross-over channel between each shaft, alternately heating carbonated materials by a combustion of at least one fuel with at least one comburent up to a temperature range in which carbon dioxide of the carbonated materials is released, the combustion of the fuel and the decarbonatation generating an exhaust gas, the decarbonated materials being cooled in the cooling zones with one or more cooling streams, wherein a mixing between the exhaust gas and the one or more cooling streams is minimized by operating said kiln in a mode in which between two subsequent alternating heating cycles between the first and the second or the third shaft, the decarbonated materials in at least the first, the second and/or the third shaft are cooled with the one or more cooling streams while a supply of the fuel in each shaft is stopped.

Fig. 1A

(52) Cooperative Patent Classification (CPC): (Cont.)

C-Sets
**C04B 2/12, C04B 2/108**

**Description**

**Technical Field**

The present invention relates to a decarbonation process of carbonated materials and to a multi-shaft vertical kiln for carrying said process.

**Background Art**

The increasing concentration of carbon dioxide in the atmosphere is recognized as one of the causes of global warming, which is one of the greatest concerns of present days. This increase is largely owed to human actions and particularly to the combustion of carbon-containing fossil fuel, for instance for transportation, household heating, power generation and in energy-intensive industries such as steel, cement and lime manufacturing.

Within the lime-production process, natural limestone (mainly composed of calcium carbonate) is heated to a temperature above 900°C in order to cause its calcination into quicklime (calcium oxide) and carbon dioxide according to the following reversible reaction :

$$CaCO_3 \leftrightarrow CaO + CO_2 \ \Delta H = 178 \ kJ/mol : Equation \ 1$$

Calcium oxide is considered as one of the most important raw materials and is used in a multitude of applications such as steel manufacturing, construction, agriculture, flue gas and water treatment as well as in glass, paper and food industry. The global annual production is estimated to be above 250 million tons.

As indicated in equation 1, $CO_2$ is a co-product of the lime-production process meaning that approximately 760 to 790 kg of $CO_2$ is unavoidably generated when producing 1 ton of lime. Moreover, the heat required for heating limestone and for conducting the reaction is usually provided by the combustion of a carbonaceous fuel, which results in additional production of $CO_2$ (ranging between 200 and more than 700 kg per ton of lime depending on the nature of the fuel and on the efficiency of the kiln).

The use of vertical-shaft kilns prevails in the lime industry as they are particularly suitable for the production of lumpy quicklime compared to other types of furnaces, such as rotary kiln, and because they have the advantage of lower specific energy input.

In a single-shaft vertical kiln, limestone or dolomitic limestone is fed through the top of the shaft and the produced lime is discharged at its bottom. In the pre-heating zone, the limestone is heated by hot gases flowing upward from the combustion zone. In the combustion zone, heat is produced through the direct firing of a fuel to reach a temperature above 900°C and consequently to cause the decomposition of the limestone into quicklime and $CO_2$. The lime then enters the cooling zone where it is cooled by air fed from the bottom of the shaft. The produced lime is finally discharged, ground and sieved into the desired particle size. Flue gas leaves the shaft at the top of the pre-heating zone and is fed to a filter system before it is vented to the atmosphere. Specific energy consumption for such single-shaft vertical kilns ranges between 4 and 5 GJ per ton of lime.

Parallel-flow regenerative kilns (PFRK) are a variant of vertical shafts that are considered as the best available technology for lime production with design capacity up to 800 tons per day. They consist in several vertical shafts (usually 2 or 3) connected by a cross-over channel. Each shaft operates alternatively according to a defined sequence. Initially, fuel is burnt in one of the shaft ("in combustion") with combustion air flowing downwards ("parallel flow" with the limestone). Hot gases are then transferred to the other shafts ("in regeneration") through the cross-over channel in order to pre-heat limestone in said other shafts. A reversal between combustion and regeneration shafts occurs typically every 15 minutes.

This operational mode enables optimal recovery of the heat contained in product and hot gases bringing the specific energy consumption down to 3.6 GJ per ton of lime. The combustion of the fuels required to bring this heat results in the production of approximately 200 kg of $CO_2$ per ton of lime when natural gas is used.

The lime industry is making efforts for reducing its $CO_2$ emissions by improving energy efficiency (including investment in more efficient kilns), using lower-carbon energy sources (e.g. replacing coal by natural gas or biomass) or supplying lime plants with renewable electricity. The $CO_2$ related to energy can thus be reduced to some extent. Nevertheless, none of these actions impacts the $CO_2$ which is inherently produced during decarbonation of limestone.

A route for further reducing emission consists in capturing $CO_2$ from the lime kiln flue gas for permanent sequestration (typically in underground geological formation) or recycling for further usage (e.g. for the production of synthetic fuels). Those processes are known under the generic term CCUS (Carbon Capture, Utilization and Storage).

Combustion air used in conventional lime kilns contains approximately 79 vol% nitrogen resulting in $CO_2$ concentration in flue gas not higher than 15-25% vol%. Additional measures are thus required to obtain a $CO_2$ stream sufficiently concentrated to be compatible with transportation, sequestration and/or utilization.

Several technologies have been investigated for concentrating $CO_2$ in particular for the power, steel and cement industry.

The reference technology for $CO_2$ capture is a post-combustion technology based on absorption with aqueous amine solvents. A typical process includes an absorption unit, a regeneration unit and additional accessory equipment. In the absorption unit, $CO_2$-containing flue gas is contacted with amine solution to produce a $CO_2$-free gas stream and an amine solution rich in $CO_2$. The rich solution is then pumped to the regeneration unit where it is heated with steam to produce a concentrated stream of $CO_2$ and a lean amine that can be recycled to the absorber. The $CO_2$ stream is then cleaned and liquefied for storage and transportation.

The energy requirements for regenerating an amine solvent (e.g. mono-ethanolamin (MEA)) is substantial (approx. 3.5 GJ per ton of $CO_2$ for MEA). While recovering waste heat to produce low temperature steam is often possible in other industrial processes, almost no waste heat is available from a PFRK (as a consequence of the high energy efficiency of PFRK). Fuel must thus be burnt for the purpose of generating steam, resulting in additional $CO_2$ production.

As described above, limestone calcination in a PFRK is an intermittent process in terms of gas flow rate (e.g. absence of flow during reversal) and in term of flue gas composition ($CO_2$ concentration varies during a cycle). However, amine scrubbers optimally operate with continuous and relatively steady flue gas. In other words, adapting the process to PFR kilns could only be achieved at the expense of a negative impact on the overall efficiency and a complex control of the process.

It is estimated that amine-based $CO_2$ capture would approximately more than double the production cost of lime or dolime. Those costs are mostly owed to fuel consumption for generating steam, electrical consumption for amine scrubbing and compression, and capital cost for equipment.

Other post-combustion technologies have been proposed for capturing $CO_2$ from flue gas (e.g. chilled ammonia, adsorption, cryogenic distillation, membranes). All these options show with varying degrees identical drawbacks to those of amines regarding capital cost, energy penalty and adaptability to intermittent processes.

Oxy-combustion is an alternative to post-combustion capture which consists in burning fuel with technical oxygen instead of conventional combustion air in order to increase $CO_2$ concentration in the flue gas. Within this process, downstream purification is eased at the expense of requiring a source of substantially pure oxygen. For instance, patent CN 105000811 B discloses the use of oxy-combustion for PFRK.

Oxygen is industrially produced using an air-separation unit (based on cryogenic distillation of air) or by pressure-swing adsorption. An amount of 200-230 kWh of electricity is required to produce one ton of oxygen with an air-separation unit.

## Aims of the Invention

The invention aims to provide a solution to overcome at least one drawback of the teaching provided by the prior art.

More specifically, the invention aims to provide a process for simultaneously allowing a decarbonation with a high production throughput of a product (e.g. quicklime, dolime) with a high decarbonation grade while producing a $CO_2$-rich stream that is suitable for sequestration or use.

## Summary of the Invention

For the above purpose, the invention is directed to a decarbonation process of carbonated materials, in particular limestone and dolomitic limestone, preferably with $CO_2$ recovery, in a multi-shaft vertical kiln comprising a first, a second, and optionally a third shaft with preheating, heating and cooling zones and a cross-over channel between each shaft, alternately heating carbonated materials by a combustion of at least one fuel with at least one comburent up to a temperature range in which carbon dioxide of the carbonated materials is released, the combustion of the fuel and the decarbonatation generating an exhaust gas, the decarbonated materials being cooled in the cooling zones with one or more cooling streams, wherein a mixing between the exhaust gas and the one or more cooling streams is minimized by operating said kiln in a mode, in which between two subsequent alternating heating cycles between the first and the second or the third shaft, the decarbonated materials in at least the first, the second and/or the third shaft are cooled with the one or more cooling streams while a supply of the fuel in each shaft is stopped.

Preferred embodiments of the present invention disclose one or more of the following features:

- the feeding of the one or more cooling streams in the first, the second or third shaft is stopped during the two subsequent alternating heating cycles;

- a portion of the at least one comburent is fed via the one or more cooling streams during the two subsequent alternating heating cycles;

- the feeding of the one or more cooling streams in at least the first, second and/or third shaft during said two subsequent alternating heating cycles is controlled in such a manner that the O2 amount fed in the first shaft and the second or third shaft via the one or more cooling streams during said two subsequent alternating heating cycles does not exceed 20%, preferably 10%, in weight the O2 amount fed in the first shaft and the second or third shaft during said two subsequent alternating heating cycles;

- the feeding of the at least one comburent supplied in the preheating zones and/or heating zones is stopped while the decarbonated materials in at least the first, the second and/or the third shaft are cooled with the one or more cooling streams while the supply of the fuel is stopped in each shaft;

- the at least one comburent comprises less than 70% $N_2$ (dry volume), in particular less than 50% of $N_2$ (dry volume), in particular said comburent being oxygen-enriched air or substantially pure oxygen;

- recirculating the exhaust gas alternately exiting the second or the first shaft, to the first or second shaft, respectively, preferably by means of a positive displacement fan or blower;

- feeding a buffer or a storage tank with the exhaust gas extracted from the multi-shaft vertical kiln, said buffer or storage tank being connectable to a $CO_2$ purification unit which can be fed with the exhaust gas;

- cooling the decarbonated materials wherein the one or more cooling streams comprise a water steam stream, said stream being fed in the cooling zone of at least the first, the second and/or the third shaft;

- providing a heat exchanger in the cooling zone of at least the first, the second and/or the third shaft for the cooling of the decarbonated materials, said heat exchangers being fed by the one or more cooling streams;

- feeding the cooling zone of at least the first, the second and/or the third shaft with the one or more cooling streams and extracting at least the one or more heated cooling streams at an upper portion of said cooling zone and/or from the at least one of the cross-over channels;

- at least one of the following cycles, preferably the following sequential cycles, are carried out:

  C1) heating the carbonated materials in the heating zone of the first shaft while transferring the generated exhaust gas to the second shaft, and optionally the third shaft, via the corresponding cross-over channel, preferably feeding the first shaft with the fuel and the at least one comburent, optionally with the recycled exhaust gas from at least the second shaft, the third shaft, the buffer and/or the storage tank and optionally cooling the decarbonated materials in at least the first and/or the second shaft, and optionally the third shaft, preferably feeding the at least the first, the second and/or the third shaft with the one or more cooling streams at its or their cooling zone lower portion;

  C2) cooling the decarbonated materials in at least the first and/or the second shaft, and optionally the third shaft, while the fuel supply and optionally the at least one comburent supply in the preheating zones and/or heating zones, is stopped, preferably feeding either - at least the first, the second and/or the third shaft with the one or more cooling streams at its or their cooling zone lower portion while extracting the one or more heated cooling streams at least: at its or their preheating zone upper portion, at its or their cooling zone upper portion and/or from the at least one of the cross-over channels or - at least the first, the second and/or the third shaft, preferably the second shaft, with the one or more cooling streams at its or their cooling zone lower portion while reinjecting the one or more heated cooling streams extracted at least at its or their cooling zone upper portion and/or from the at least one of the cross-over channels, preferably the cross-over channel between the first and second shafts, in a lower portion of the preheating zone of at least the first, the second and/or the third shaft, preferably the second shaft, in particular by means of a collecting ring;

  C3) heating the carbonated materials in the heating zone of the second shaft while transferring the generated exhaust gas to the first, and optionally the third shaft, via the corresponding cross-over channel, preferably feeding the second shaft with the fuel and the at least one comburent, optionally with the recycled exhaust gas from at least the first shaft, the third shaft, the buffer and/or the storage tank and optionally cooling the decarbonated materials in at least the first and/or the second shaft, and optionally the third shaft, preferably feeding the at least the first, the second and/or the third shaft with the one or more cooling streams at its or their cooling zone lower portion;

C4) cooling the decarbonated materials in at least the first and/or the second shaft, and optionally the third shaft while the fuel supply and optionally the at least one comburent supply in the preheating zones and/or heating zones, is stopped, preferably feeding either - at least the first, the second and/or the third shaft with the one or more cooling streams at its or their cooling zone lower portion while extracting the one or more heated cooling streams at least: at its or their preheating zone upper portion, at its or their cooling zone upper portion and/or from the at least one of the cross-over channels or - at least the first, the second and/or the third shaft, preferably the first shaft, with the one or more cooling streams at its or their cooling zone lower portion while reinjecting the one or more heated cooling streams extracted at least at its or their cooling zone upper portion and/or from the at least one of the cross-over channels, preferably the cross-over channel between the first and second shafts, in a lower portion of the preheating zone of at least the first, the second and/or the third shaft, preferably the first shaft, in particular by means of a collecting ring.

- at least one of the following cycles, preferably the following sequential cycles consecutive to cycle C4, are carried out:

C5) heating the carbonated materials in the heating zone of the third shaft while transferring the exhaust gas generated to the first and/or second shaft, via the corresponding cross-over channel, feeding the third shaft with the fuel and the at least one comburent, optionally with the recycled exhaust gas from at least the first shaft, the second shaft, the buffer and/or the storage tank and optionally cooling the decarbonated materials in at least the first and/or the second shaft, and optionally the third shaft, preferably feeding the at least the first, the second and/or the third shaft with the one or more cooling streams at its or their cooling zone lower portion;

C6) cooling the decarbonated materials in at least the first, the second and/or the third shaft while the fuel supply and optionally the at least one comburent supply in the preheating zones and/or heating zones, is stopped, preferably feeding either - at least the first, the second and/or the third shaft with the one or more streams at its or their cooling zone lower portion while extracting the one or more heated cooling streams at least: at its or their preheating zone upper portion, at its or their cooling zone upper portion and/or from at least one of the cross-over;

- the ratio between the maximal mass flow of the one or more cooling streams supplied during at least one of the cycle C2, C4 and/or C6, is set up so that it represents at least 90%, preferably 100% of the maximal mass flow of the one or more cooling streams, said maximal mass flow corresponding to the maximal pressure that any of the shafts is capable to sustain, preferably said pressure is comprised in the range 300 to 600 mbars, preferably 450 mbars, over the atmospheric pressure ;

- between the two subsequent alternating heating cycles, in the first and the second or the third shaft, depressurizing the first and the second and optionally the third shaft for a predetermined time period before the decarbonated materials in at least the first, the second and/or the third shaft are cooled with the one or more cooling streams while the supply of the fuel and optionally the at least one comburent in each shaft is stopped, preferably the first and the second and optionally the third shaft are depressurized down to reach a level comprised in the range of 1 to 600 mbars, preferably 500 mbars, under the atmospheric pressure;

- the first alternating heating cycle of the two subsequent alternating heating cycles in the first and the second or the third shaft, is performed directly after a preceding alternating heating cycle in the second or third shaft, without a cooling cycle therebetween, in which the supply of the fuel and optionally the at least one comburent in each shaft is stopped and/or the decarbonated materials in at least the first, the second and/or the third shaft are cooled with the one or more cooling streams;

- feeding the carbonated materials into at least one of the first, second or third shaft, via a feeding system, each system comprising a lock chamber delimited by an upstream valve assembly and a downstream valve assembly, said feeding system being configured to collect the carbonated materials in the lock chamber, while the upstream valve assembly is open and the downstream valve assembly is closed, to store in a substantially gas tight manner the carbonated materials, while both the upstream and downstream valve assemblies are closed, and to release the carbonated materials, while the upstream valve assembly is closed and the downstream valve assembly is open;

- discharging the decarbonated materials from at least one of the first, second and/or third shaft, via a discharging system, each system comprising a lock chamber delimited by an upstream valve assembly and a downstream valve assembly, said discharging being configured to collect the decarbonated materials, while the upstream valve assembly is open and the downstream valve assembly is closed, to store in a substantially gas tight manner the decarbonated materials, while both the upstream and downstream valve assemblies are closed, and to release the decarbonated materials, while the upstream valve assembly is closed and the downstream valve assembly is open;

- the upstream or downstream valve assembly comprising a single or multiple flap valve, a table feeder, a rotary valve, a cone valve, a J valve, a L valve, a trickle valve, preferably a single or multiple flap valve;

- providing one or more additional kilns to the multi-shaft vertical kiln, forming a plurality of kilns generating an aggregated exhaust gas stream, so as to minimize flow variation of the aggregated exhaust gas stream entering a $CO_2$ purification unit, in particular coordinating the plurality of kilns by selecting at least one cycle phasing and duration of said kilns;

- the $CO_2$ purification unit is continuously fed with either the exhaust gas from the buffer, the exhaust gas from the storage tank, the exhaust gas from the multi-shaft vertical kiln, the one or more additional kilns or a combination of them;

- transferring the $CO_2$ from the storage tank to the buffer;

- the fuel used is either carbon-containing fuel or dihydrogen-containing fuel or a mixture of them;

- the boiling liquid $CO_2$ is stored in the storage tank to form recycled exhaust gas and transferring said gas to the multi-shaft vertical kiln;

- separating air with an air separation unit forming an Oxygen-enriched composition comprising at least 70% (dry volume) $O_2$, preferably at least 90% (dry volume), in particular at least 95% (dry volume) and a Nitrogen-enriched composition comprising at least 80% (dry volume) $N_2$ preferably at least 90% (dry volume), in particular at least 95% (dry volume) and less than 19% (dry volume) $O_2$, preferably less than 15 % (dry volume), in particular less than 10% (dry volume);

- the air separation unit is within a radius of 2 km, preferably 500 m from the multi-shaft vertical kiln;

- the at least one comburent supplied in the preheating zones and/or heating zones comprises at least 40% (dry volume), preferably at least 70%(dry volume), in particular at least 90% (dry volume) of the Oxygen-enriched composition;

- feeding the at least one comburent alone or mixed with the recycled exhaust gas in the preheating zones and/or heating zones;

- feeding the Oxygen-enriched composition alone or mixed with the recycled exhaust gas in the preheating zones and/or heating zones;

- mixing feeding the Oxygen-enriched composition of step 1e) with another comburent such as air and optionally the recycled exhaust gas, and feeding said mixture in the preheating zones and/or heating zones;

- the one or more cooling streams fed during the two subsequent alternating heating cycles comprise at least 80% (dry volume), preferably at least 90% (dry volume), in particular 95% (dry volume) of said Nitrogen-enriched composition, said stream being fed in the cooling zone of at least the first, the second and/or the third shaft;

- feeding Nitrogen-enriched composition in the one or more cooling streams.

## Brief Description of Drawings

Aspects of the invention will now be described in more details with reference to the appended drawings, wherein same reference numerals illustrate same features.

Figures 1 to 16 shows the first to the sixteenth embodiments according to the invention.

Figure 17 shows an embodiment according to the prior art.

Figures 18 to 22 show further embodiments according to the invention.

List of reference symbols

| MSVK | multi-shaft vertical kiln |
|---|---|
| CPU | $CO_2$ purification unit |
| 10 | carbonated materials |
| 14 | exhaust gas from combustion chamber 600 |
| 20 | Fuel |
| 30, 31, 32 | Comburent |
| 40 | exhaust gas (from fuel + decarbonation) |
| 41 | exhaust gas (from auxiliary combustion chamber 600) to be injected in the shaft via the cross-over channel |
| 42 | exhaust gas mixture (from combustion chambers 180, 280 or mixing chambers 190, 290) to be injected in the shaft via the cross-over channel |
| 50 | decarbonated materials |
| 91, 92 | cooling streams: 91 = at least air and/or $CO_2$ 92 = water steam |
| 100,200,300 | 1st, 2nd, 3rd shafts |
| 110,210,310 | preheating zones |
| 111,211 | upper end of preheating zones |
| 120,220,320 | heating zones |
| 130,230,330 | cooling zones |
| 131,231,331 | upper end of cooling zone |
| 132,232,332 | lower end of cooling zone |
| 133,233,333 | heat exchanger |
| 412,423,431 | cross-over channels |
| 600 | auxiliary combustion chamber |
| 700 | condensation unit |
| 800 | boiler |
| 1100 | feeding system for the carbonated material feeding |
| 1200 | discharge system for the decarbonated material discharge |
| 1300 | discharge table |

## Detailed description

The present invention will now be described in details with reference to the accompanying drawings and their reference numbers, in which illustrative and non-limitative embodiments of the invention are shown.

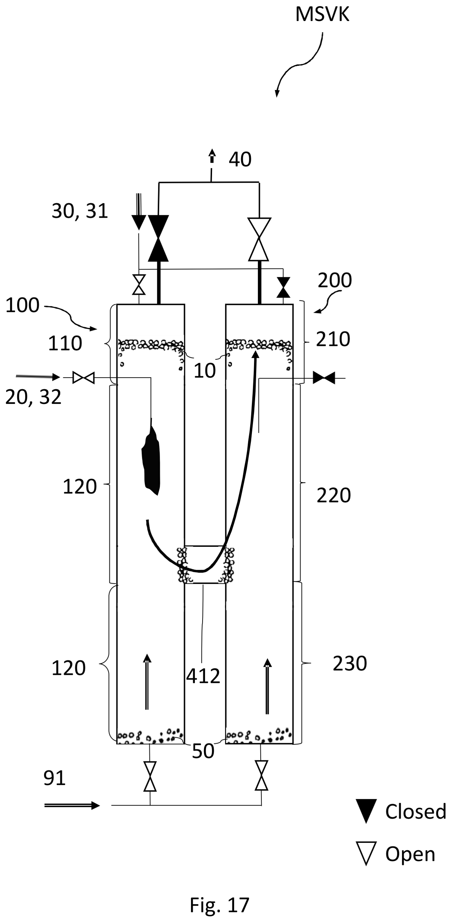

Figure 17 shows a multi-shaft vertical kiln (MSVK) according to the state of the art. The multi-shaft vertical kiln (MSVK) in Figure 17 is based on a traditional parallel-flow regenerative kiln which is a specific case of a multi-shaft vertical kiln. The multi-shaft vertical kiln, also designated MSVK kiln comprises a first shaft 100 and a second 200 shaft with preheating zones 110, 210, heating zones120, 220 and cooling zones 130, 230, as well as a cross-over channel 412 arranged between the first 100 and second 200 shafts. In use, the carbonated materials 10 are introduced at an upper portion 111, 211 of each shaft 100, 200. The carbonated materials 10 slowly move to the bottom. In the preheating zones 110, 210, the carbonated materials 10 are essentially preheated with the alternating regenerative exhaust gas 40. In the combustion zones 210, 220, the carbonated materials 10 are alternately heated by a combustion of fuel 20 with at least one comburent 30, 31, 91, namely air, up to a temperature range in which carbon dioxide of the carbonated materials 10 is released. Both the combustion of the fuel 20 with the at least one comburent 30, 31, 91 and the decarbonatation generate the exhaust gas 40. The decarbonated materials 50 formed after the release of the $CO_2$ from the carbonated materials 10 are directly cooled in the cooling zones 130, 230 by an air stream 91 that is burned with the fuel.

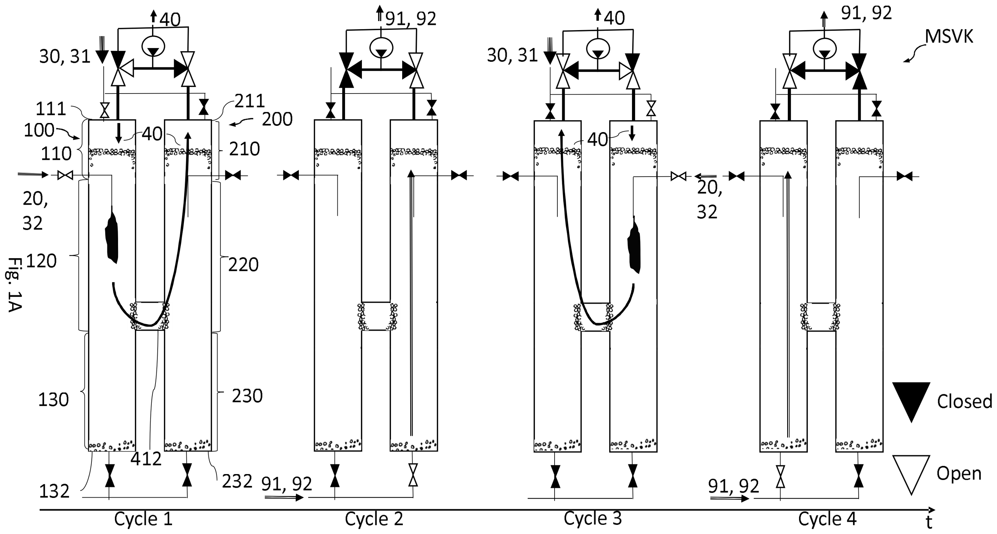

Figure 1A shows a multi-shaft vertical kiln (MSVK) according to a first embodiment of the present invention. The first embodiment differs from a traditional parallel-flow regenerative kiln (PFRK) in that the control of the kiln leads to a $CO_2$ enriched exhaust gas. For instance, the control of the opening or closing of the valves (e.g. louvers) as well as the activation of the blowers are set up so that the contacts of combustion flows and cooling flows are minimized. The first embodiment is characterized in that between two subsequent, alternating heating cycles between the first 100 and the second 200 shafts, the decarbonated materials 50 in at least the first 100 and/or the second 200 shaft are cooled with a cooling stream 91, in particular air, while a supply of the fuel 20 and optionally the at least one comburent 30, 31 in each shaft 100, 200 is stopped. This operation mode is also named "intermittent flush". Generally, the first embodiment requires few modifications to an existing parallel-flow regenerative kiln PFRK to operate. The modifications may comprise for instance the provision of an

$O_2$-enriched comburent and new software. Starting from a PFRK, the first embodiment is therefore practical to implement. Nevertheless, the first embodiment may require further hardware modifications such as the provision of at least one valve arranged in the exhaust line to release the heated cooling flow in the atmosphere or in a subsequent gas-treatment apparatus (e.g. filter). Furthermore, one or more blowers may be required if an exhaust gas recirculation is performed as shown in Figure 1A. This way of operating the MSVK in which the cooling steams 91 and the exhaust gas stream are separated in the "time" allows to generate exhaust gas with a high $CO_2$ content.

In the first embodiment, the control of the MVSK can comprise the following sequential cycles:

Cycle 1 comprises feeding the first shaft 100 with fuel 20, at least one comburent 30, 31 (e.g. air, oxygen-enriched air or substantially pure oxygen) and the recycled exhaust gas 40 from the second shaft 200, while transferring the generated exhaust gas 40 to the second shaft 200 via the cross-over channel 412 : H1R2 (heating shaft 1, regeneration shaft 2).

Cycle 2 comprises feeding the second 200 shaft with a cooling stream 91 at the lower portion 232 of its cooling zone while extracting the heated cooling stream 91 (e.g. air) at the upper portion 211 of its preheating zone: C1-2 (cooling shaft 2).

Cycle 3 comprises feeding the second shaft 200 with the fuel 20, the at least one comburent 30, 31, 32 (e.g. air, oxygen-enriched air or substantially pure oxygen) and the recycled exhaust gas 40 from the first shaft 100, while transferring the generated exhaust gas 40 to the first shaft 200 via the cross-over channel 412 : R1H2 (heating shaft 2, regeneration shaft 1).

Cycle 4 comprises feeding at least the first shaft 100 with the cooling stream 91 at the lower portion 132 of its cooling zone while extracting the heated cooling stream 91 at the upper portion 111 of its preheating zone: C1-2 (cooling shaft 1).

While Figure 1A shows that only one shaft is flushed per cooling cycle, in an alternative, both shaft can be flushed simultaneously (C1-2) to reduce the cooling phase duration.

The above-mentioned sequence can be described as H1R2, C2, R1H2, C1, ..., H1R2, C2, R1H2, C1. The invention is not limited to this sequence and can follow various patterns that can be adjusted depending on the circumstances such as H1R2, C1-2, R1H2, C2, C1-2, C2, R1H1, C1, R1H2...

We understand by the at least one comburent an oxidizing agent such as either air, oxygen-enriched air or substantially pure oxygen, alone or in combination with the exhaust gas or substantially pure $CO_2$. Preferably, the comburent is an oxygen-enriched air or substantially pure oxygen. One or more comburents are foreseen, in particular:

- a comburent 30, or

- a first 31 and a second comburent 32.

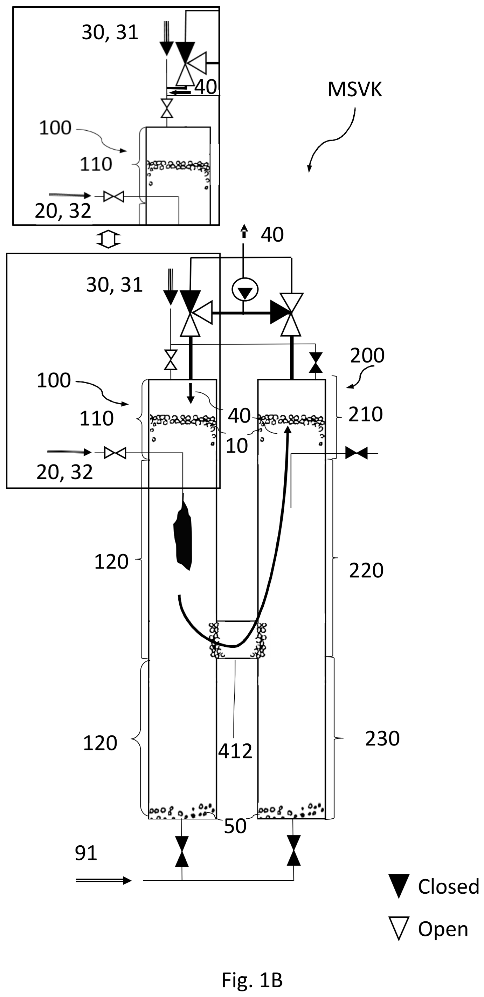

Figure 1B schematically shows a multi-shaft vertical shaft MSVK of Figure 1A in cycle 1. Three separate supply passages per shaft are shown in Figure 1A and 1B :

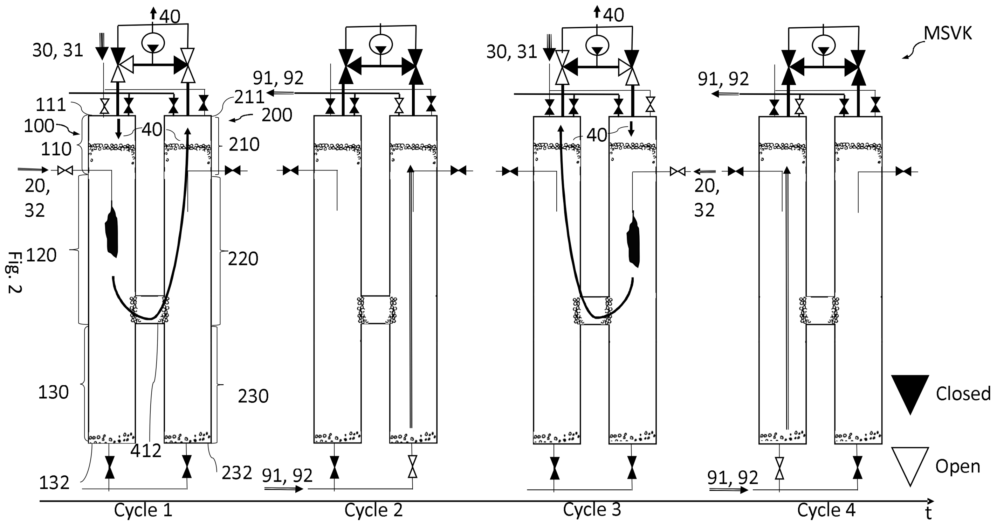

- a first passage arranged at an upper portion of the multi-shaft vertical kiln (e.g. PFRK) traditionally supplying a (first) comburent 30, 31 (e.g. primary air supply). Even if Figure 2 shows one first supply passage, the multi-shaft vertical kiln MSVK may comprise more than one first supply passage per shaft 100, 200. The one or more first passage outlet openings are arranged in the corresponding shaft 100, 200. In the present disclosure, the comburent 30 or the first comburent 31 is preferably oxygen-enriched air or substantially pure oxygen.

- a second passage (e.g. fuel lance) traditionally supplying fuel 20 (e.g. natural gas, oil) and optionally the second comburent 32 (e.g. air). Even if Figure 1 shows only one second supply passage, the multi-shaft vertical kiln comprises one or more second supply passages per shaft 100, 200 generally under the form of fuel/air lances. For instance, a mixture of fuel 20 and the second comburent 32 (e.g. coke with the conveying second comburent such as air) can be supplied through at least a part of the lances. Alternatively, a group of lances supplies the second comburent 32 (e.g. air), while another group of lances supplies the fuel 20 (natural gas or oil). In the present disclosure, the second comburent 32 is preferably oxygen-enriched air or substantially pure oxygen.

- a third passage is shown in Figure 1B. Such a passage is traditionally not present on a multi-shaft vertical kiln MSVK, in particular a parallel flow regenerative kiln PFRK. Said third passage is dedicated to the supply of the recycled exhaust gas 40. The present disclosure is not limited to a single third passage. Indeed, it can be foreseen that one or more third passages are in fluid connection with the corresponding shaft 100, 200.

In an alternative preferred form (shown schematically in a "window" arranged above the MSVK in Fig. 1B), a downstream end of the third passage is connected to the first passage. The present disclosure is not limited to a single third passage connected to a single first passage. Indeed, it can be foreseen that one or more downstream ends of the third passage(s) are connected to one or more first passages. The one or more first passages can feed the corresponding shaft 100, 200 with:

- a gas mixture comprising the recycled exhaust gas 40 and the first comburent 30 (e.g. oxygen-enriched air or substantially pure oxygen) according to the first preferred alternative, or

- the recycled exhaust gas 40 according to the second preferred alternative.

In the above-mentioned first preferred alternative, the fuel 20 (e.g. natural gas or oil, dihydrogen) is supplied via the one or more second passages.

In the above-mentioned second preferred alternative, the one or more second passages supply both the second comburent 31 (e.g. oxygen-enriched air or substantially pure oxygen) and the fuel 20 (e.g. natural gas, oil, coke or dihydrogen). For instance, a group of lances supply the second comburent 32 (e.g. oxygen-enriched air or substantially pure oxygen) while another group supplies the fuel 20 (e.g. natural gas, oil or dihydrogen).

The first, second and third passages can be found in other embodiments of the present invention.

Figure 2 shows the second embodiment of the present invention. The second embodiment differs from the first embodiment in that separated venting flow passages are foreseen for the heated cooling stream 91.

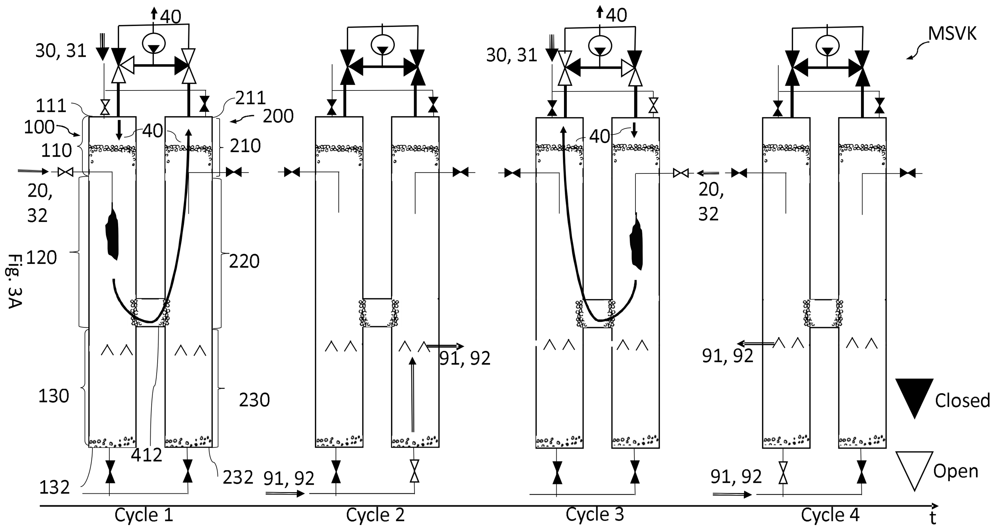

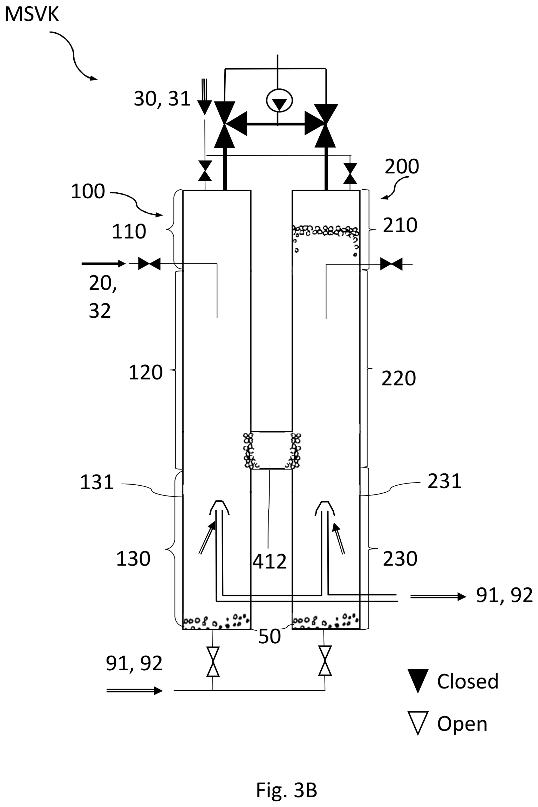

The third embodiment of the present invention according to Figure 3A differs from the first embodiment in that the heated cooling stream 91 is extracted at the upper portion 131, 231 of the cooling zone instead of the upper portion 111, 211 of the preheating zone. Figure 3A shows that the heated cooling stream 91 is extracted via one or more apertures formed in wall sections of the upper portions of the cooling zones 130, 230. Alternatively, or in combination to the one or more apertures, suction pipes extending vertically in a central portion of the cooling zones 130, 230 according to Figure 3B can be provided. Indeed, Figure 3B shows a multi-shaft vertical kiln MSVK. In particular, one or more apertures (in Fig. 3B, only one aperture is shown per shaft), through which the heated cooling stream 91 is extracted, are formed in a pipe assembly preferably centrally arranged in each shaft 100, 200. The one or more apertures are covered by a screen assembly preventing the intrusion of solid materials into the cooling extraction system. In Figure 3B, the first and second shafts 100, 200 are cooled in comparison to the teaching of Figure 3A where the second or first shaft 200 is cooled. Eventually, the pipe assembly can be adapted so that it can be selected that at least one out of the two shafts is cooled, for instance alternately.

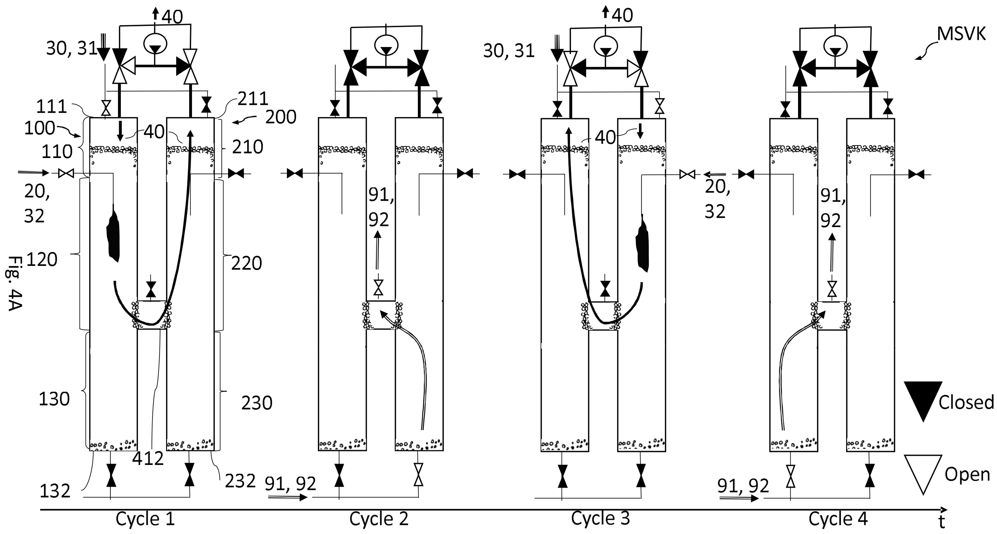

Figure 4A shows the fourth embodiment of the present invention. The fourth embodiment differs from the first embodiment in that the heated cooling stream 91 is extracted from the cross-over channel 412 instead of the upper portion 111, 211 of the preheating zone. In particular, a preexisting opening foreseen for post-combustion can be used to ensure the extraction of the heated cooling stream.

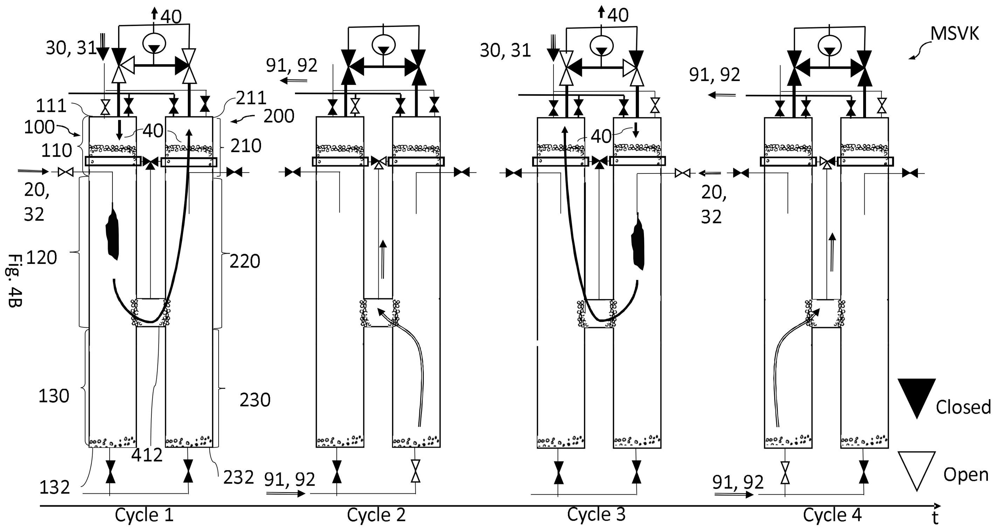

Figure 4B presents a variation of the fourth embodiment and differs from Figure 4A in that the heated cooling streams 91 by-pass the combustion zones 120, 220 and are then used to heat the carbonated material 10 in the preheating zones 110, 210. This measure reduces the extraction of $CO_2$ present (the concentration of $CO_2$ increases with the temperature) in combustion zones 120, 220 by the heated cooling streams 91. Thus, the concentration of $CO_2$ contained in the heated cooling streams 91 can be reduced. In cycle 2, the second 200 shaft is fed with the cooling stream 91 at its cooling zone lower portion 232 and the heated cooling stream is extracted from the cross-over channel 412 and then reinjected in a lower portion 212 of the preheating zone 210 of the second (as shown) shaft, in particular by means of a collecting ring. In cycle 4, the first 100 shaft is fed with the cooling stream 91 at its cooling zone lower portion 132 and the heated cooling stream is extracted from the cross-over channel 412 and then reinjected in a lower portion 112 of the preheating zone 110 of the first (as shown) shaft, in particular by means of a collecting ring. This solution can be extended to a kiln with more than two shafts MSVK, in particular a three shaft kiln MSVK.

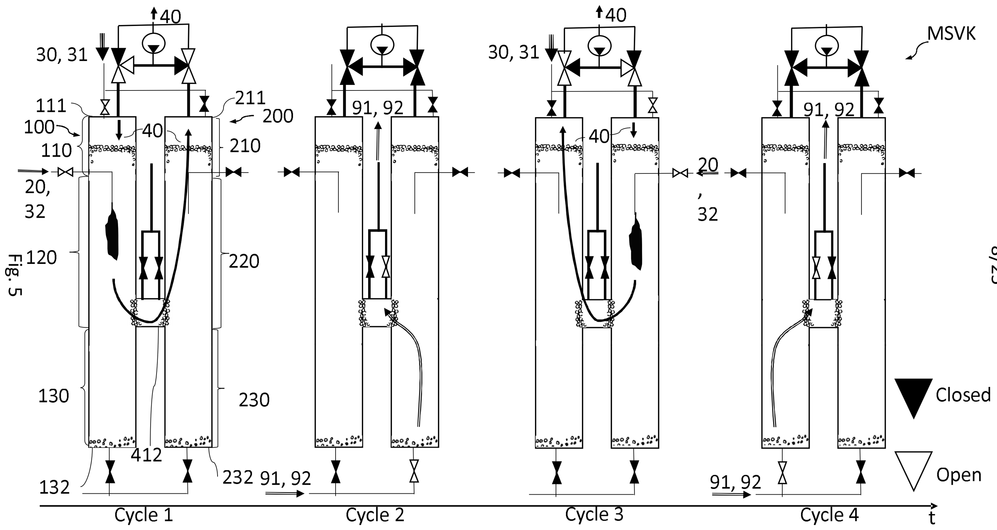

Figure 5 shows the fifth embodiment of the present invention. The fifth embodiment differs from the fourth embodiment in that two openings are foreseen in the cross-over channel 412. Both openings are preferably positioned adjacent to the shafts 100, 200, respectively so as to reduce the path of the cooling stream 91 in the cross-over channel 412, thereby reducing the heat transfers.

In comparison to the first (Fig. 1A, 1B) or the second (Fig. 2) embodiment, either the third (Fig. 3A, 3B), fourth (Fig. 4A, 4B) or the fifth (Fig. 5) embodiment minimizes that carbonated materials 10 in the combustion 120, 220 and/or preheating 110, 120 zones are flushed with the cooling stream 91 during the cooling cycles (e.g. cycle 2 and cycle 4).

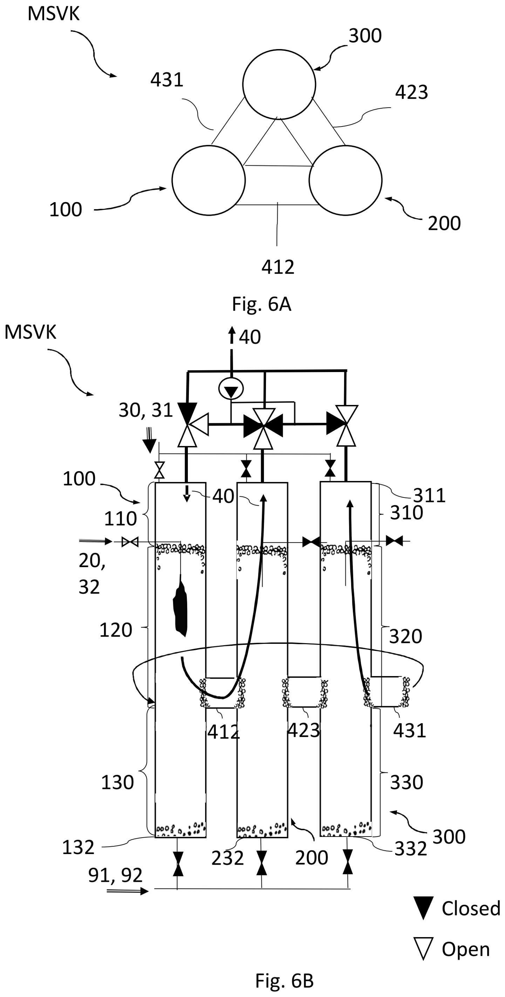

Figure 6A and 6B show the sixth embodiment of the present invention. The sixth embodiment differs from the first embodiment in that the MVSK kiln comprises a third shaft 300. This embodiment is a generalization of the "intermittent flush" use to a three-shaft kiln. As for the first embodiment, the operation sequences, in the sixth embodiment, follow the "intermittent flush" use in which an intermittent cooling cycle is interposed between two heating cycles. Figure 6A shows a top view of a MVSK kiln according to the sixth embodiment. Figure 6B presents a lateral view of an "unrolled" MVSK kiln, where all the shafts are arranged in a plane. Figure 6B also schematically shows the fluid flows during a given operating cycle. In particular, during this cycle, the first shaft 100 is fed with fuel 20, the at least one comburent 30, 31 and the recycled exhaust gas from the second and third shafts. At the same time, the generated exhaust gas 40 in the combustion and decarbonation is transferred to the second shaft 200 and the third shaft 300 via the corresponding cross-over channel 412, 431.

A typical sequence for a three-shaft vertical kiln according to the sixth embodiment is described as follow:

Cycle 1 (shown in Fig. 6B) comprises heating the carbonated materials in the heating zone 120 of the first shaft 100 while transferring the generated exhaust gas 40 to the second shaft 200 and the third shaft 300, via the corresponding cross-over channel 412, 431: H1R2-3 (heating shaft 1, regeneration shaft 2, regeneration shaft 3).

Cycle 2 comprises cooling the decarbonated materials 50 in the first 100, the second 200 and the third 300 shafts, while the fuel 20 supply is stopped C1-3 (cooling shaft 1, cooling shaft 2, cooling shaft 3).

Cycle 3 comprises heating the carbonated materials 10 in the heating zone 220 of the second shaft 200 while transferring the generated exhaust gas 40 to the first 100 and the third 300 shafts, via the corresponding cross-over channel 412, 423 (R1H2R3).

Cycle 4 comprises cooling the decarbonated materials 50 in the first 100, the second 200 and the third 300 shafts, while the fuel supply 20 is stopped (C1-3).

Cycle 5 comprises heating the carbonated materials 10 in the heating zone 320 of the third shaft 300 while transferring the exhaust gas 40 generated to the first 100 and second 200 shafts, via the corresponding cross-over channel 431, 423 (R1-2H3).

Cycle 6 comprises cooling the decarbonated materials 50 in the first 100, the second 200 and the third 300 shafts while the fuel 20 supply is stopped (C1-3).

The above-mentioned sequence can be described as H1R2-3, C1-3, R1H2R3, C1-3, R1-2H3, C1-3. The invention is not limited to this sequence and can follow various patterns that can be adjusted depending on the circumstances such as H1R2, C1-2, H3R1, C3, H1R2-3, C1C2, ...

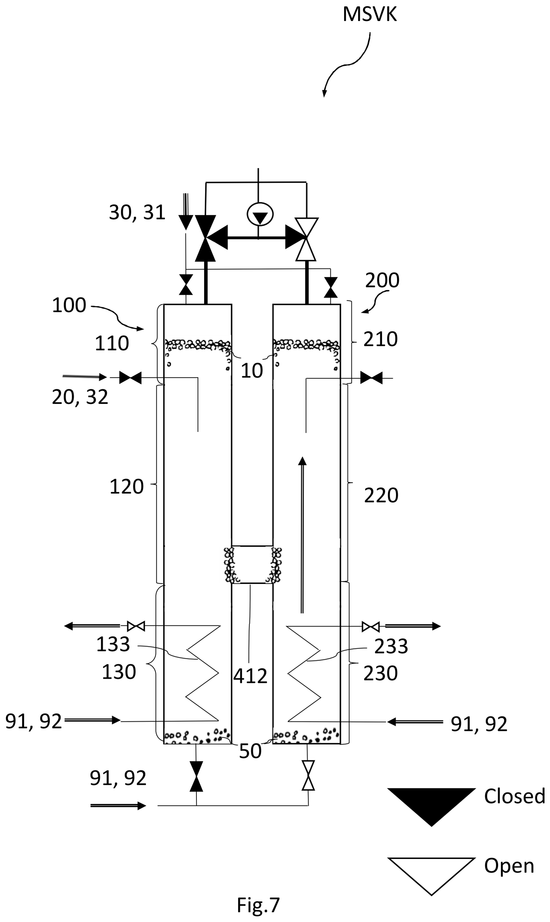

Figure 7 (e.g. cycle 2) shows the seventh embodiment of the present invention. The seventh embodiment differs from the first embodiment in the provision of a heat exchanger 133, 233 in the cooling zone 130, 230 that reduces the direct cooling of the decarbonated materials 50 with the cooling stream 91, thereby reducing that $CO_2$ from decarbonation during cooling phase is conveyed with the cooling streams 91. Furthermore, the decarbonated materials 50 in the cooling zones 130, 230 can be indirectly cooled during the heating cycle.

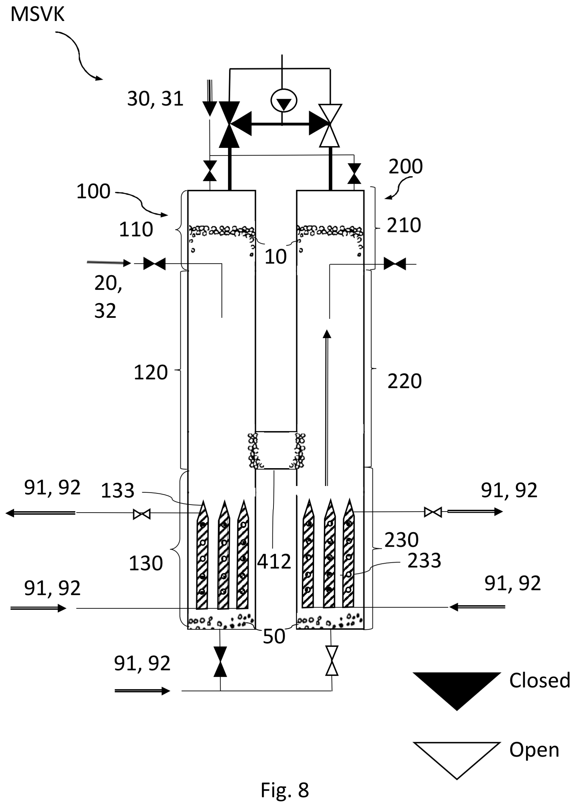

Figure 8 shows a multi-shaft vertical kiln (MSVK) according to an eight embodiment of the present invention. The eight embodiment differs from the seventh embodiment in a specific design of heat exchanger 133, 233, namely a plurality of passages is provided in the cooling zones of the first 100 and the second 200 shafts. The passages extending preferably vertically are delimited by walls, in which the cooling stream, in particular air stream circulates. Air is presented as a preferred cooling medium because of its accessibility but other fluid can be used depending on the circumstances.

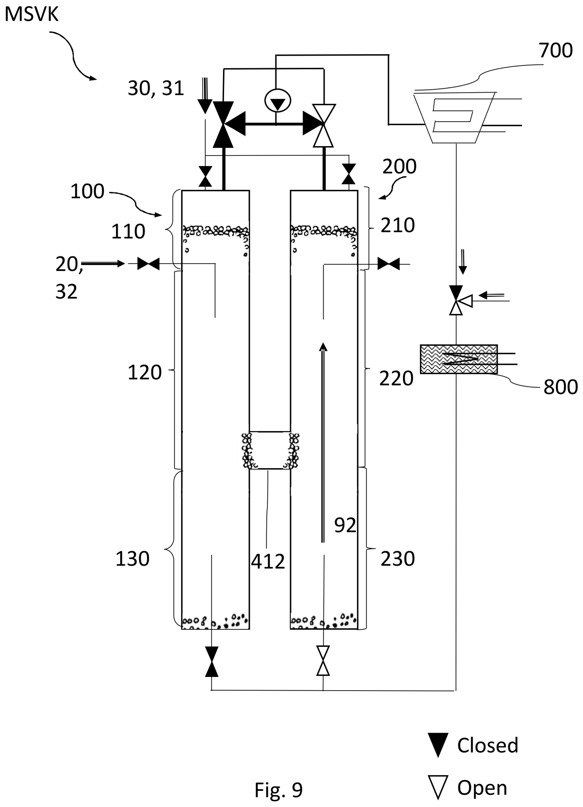

Figure 9 shows a multi-shaft vertical kiln (MSVK) according to a ninth embodiment of the present invention. The ninth embodiment differs from the first embodiment in that a water steam stream 92 is used to ease the extraction of the $CO_2$ from decarbonation during cooling phase. The water steam stream 92 conveys the $CO_2$ outside of the shafts 100, 200, where a condenser separates the water from the cooling stream 92, thereby obtaining a stream enriched in $CO_2$.

We understand by water stream steam a stream comprising at least 50% by weight water, preferably at least 80% by weight water, more preferably at least 90% by weight water.

The water used to generate the water steam can originate from either condensed water from the exhaust gas 40 exiting the MVSK kiln. Another water source can be river water, rain water, industrial water, tap water, or a combination of them. The water is heated in a boiler 800 before it is fed to the cooling zones 130, 230. The supply of water steam 92 in the shafts 100, 200 is an efficient way to cool the decarbonated materials 50. However, the use of water steam as a cooling medium presents some limitations. Indeed, the temperature of the carbonated materials 50 should be maintained at a temperature above around 450°C in order to avoid a dry slaking of the decarbonated materials 50. Therefore, the water steam should be introduced via one or more nozzles arranged in a middle or upper portion of the cooling zone to minimize any hydration on the decarbonated materials 50 in the cooling zones 130, 230.

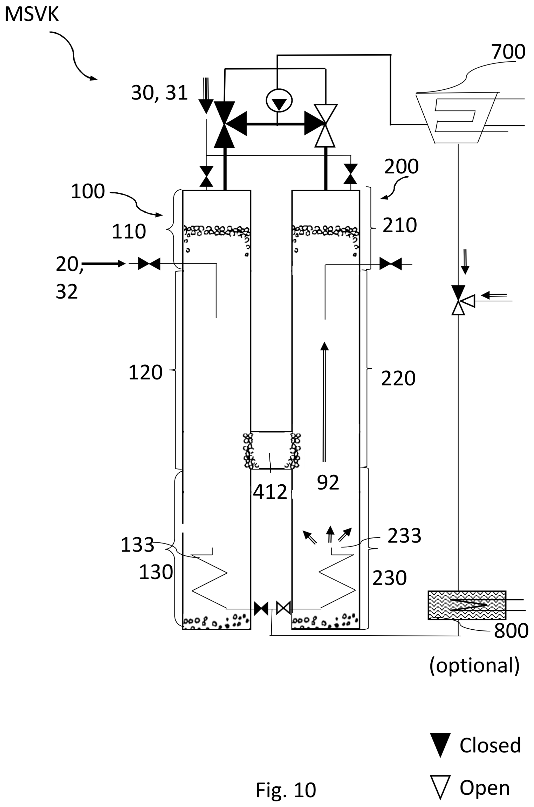

Figure 10 shows the tenth embodiment of the present invention. The tenth embodiment differs from the ninth embodiment in that heat exchangers 133, 233 arranged inside the cooling zones 130, 300 are provided to vaporize the liquid water and then superheat the water vapor instead of an external boiler 800. Heat exchangers 133, 233 arranged inside the cooling zones 130, 230 can also be combined with one or more external boiler 800.

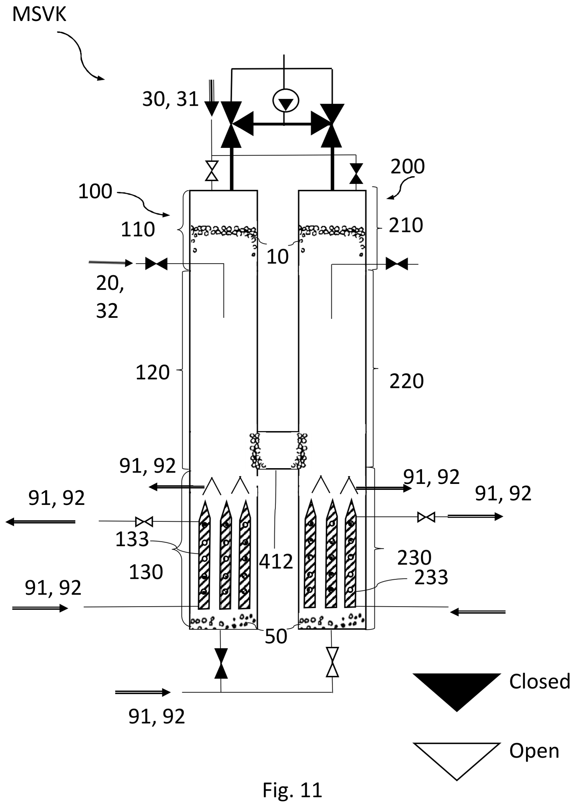

In an eleventh embodiment of the present invention (shown in Fig. 11), it is envisaged to combine a direct cooling (e.g. Fig. 3A, 3B) and an indirect cooling (e.g. Fig. 7 or 8) so as to enhance the cooling and/or use two different cooling media (e.g. air and water).

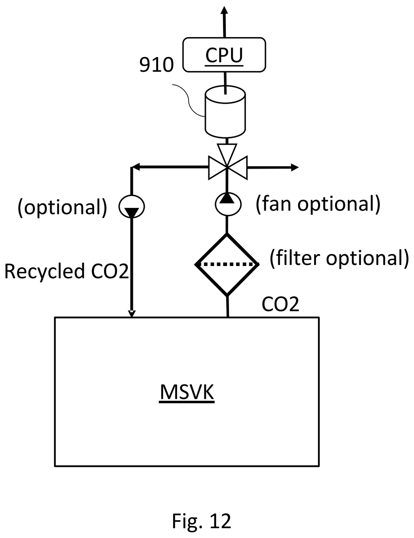

Figure 12 shows the twelve embodiment of the present invention. The twelfth embodiment differs from any of the previous embodiments in that a buffer 910 and a $CO_2$ purification unit (CPU) are provided in the exhaust line connected to the MSVK kiln. The buffer 910 ensures that the $CO_2$ purification unit (CPU) can be fed at any time with the exhaust gas 40. The $CO_2$ purification unit (CPU) is configured to remove at least one of the following elements: acid gases, O2, Ar, CO, $H_2O$, NOx, sulfur compounds, heavy metals, in particular Hg, Cd, and/or organic compounds, in particular $CH_4$, benzene, hydrocarbons. Preferably, the $CO_2$ purification unit (CPU) is adapted to adjust the composition of the exhaust gas 40 to the specification required by a carbon capture and utilization or carbon capture and storage application, preferably with a $CO_2$ content above 80% (dry volume) and more preferably above 95% (dry volume).

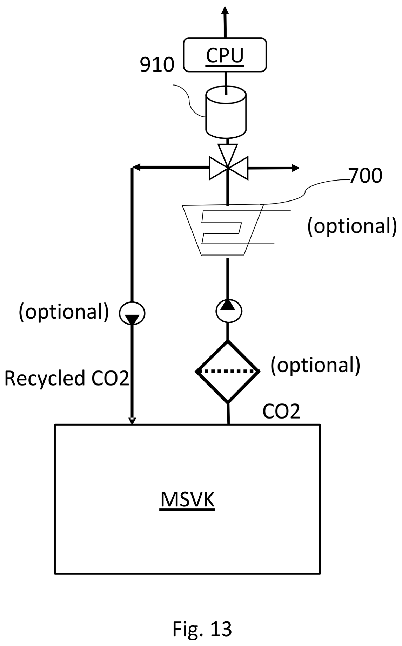

Figure 13 shows the thirteen embodiment of the present invention. The thirteenth embodiment differs from the twelfth embodiment in the provision of a condensation unit 700 arranged in the exhaust line. The condensation unit 700 allows to increase the concentration of $CO_2$ by removing water. The water separated could be recycled for the cooling of the cooling zones 130, 230, 230 of the MSVK kiln.

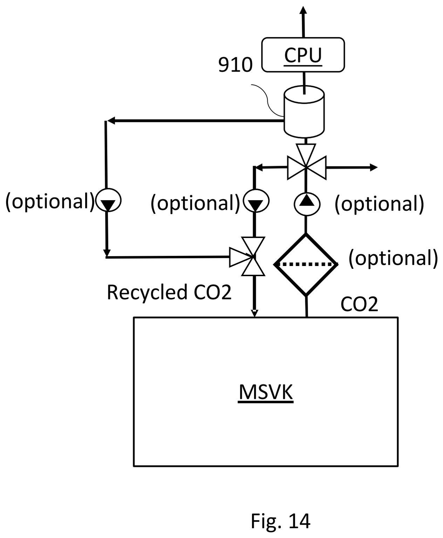

Figure 14 shows the fourteen embodiment of the present invention. The fourteenth embodiment differs from the thirteenth embodiment in a recycling passage connecting the buffer 910 to the MSVK kiln. The buffer 910 allows to supply the MSVK kiln with exhaust gas 40 enriched in $CO_2$.

As shown in Figure 12, 13 or 14, the buffer 910 can be pressurized by means of one or more compressors. Thanks to this measure the same damping effect can be achieved with a smaller volume. In case the buffer 910 is pressurized, the pump or fan recycling the $CO_2$ to the MSVK may not be necessary since the $CO_2$ would naturally flow to the shafts 100; 200, 300 due the pressure difference between the buffer 910 and the shafts 100, 200, 300.

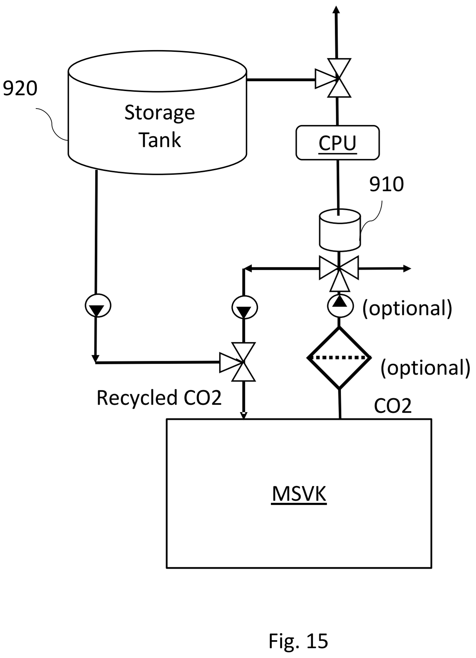

Figure 15 shows the fifteenth embodiment of the present invention. The fifteenth embodiment differs from the twelfth embodiment in the provision of a storage tank 920 positioned downstream from the $CO_2$ purification unit (CPU). The storage tank 920 is filled with purified $CO_2$, in particular in liquid form for the carbon capture and utilization or carbon capture and storage application. Furthermore, a recycling passage is provided for connecting the storage tank 920 to the MSVK kiln. The storage tank 920 allows to supply the MSVK kiln with exhaust gas 40 enriched with $CO_2$. The storage tank 920 can comprise a blow-off valve for cooling liquid $CO_2$ stored in said tank 920. The boiled $CO_2$ can be recycled to the MVSK kiln or to any kiln of any type. The cooled $CO_2$ extracted from the storage tank can be used as an indirect cooling stream 91 before being fed to the shafts of the MSVK kiln to enrich the exhaust gas in $CO_2$. Preferably, the $CO_2$ recycled stream is preheated in the heat exchanger 130, 230 or other means before being feed to the MSVK kiln.

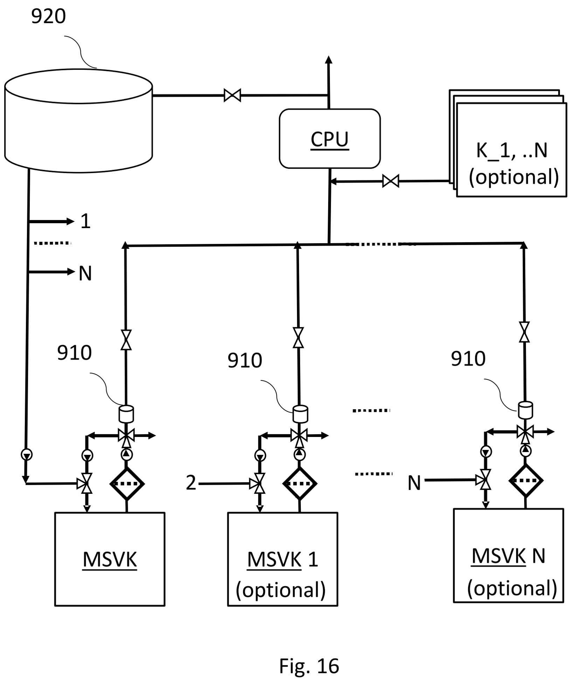

Figure 16 shows the sixteenth embodiment of the present invention. The sixteenth embodiment differs from the fifteenth embodiment in that one or more multi-shaft vertical kilns according to any previous embodiments MSVK _1, MSVK _2, MSVK _N or either one or more traditional limestone kilns K_1, K_N are connected to the $CO_2$ purification unit (CPU). These kilns MSVK, MSVK _1, MSVK _2, MSVK _N, K_1, K_N generate an aggregated exhaust gas stream, thereby minimizing flow variation of the aggregated exhaust gas stream entering the $CO_2$ purification unit (CPU). In particular, the kilns MSVK, MSVK _1, MSVK _2, MSVK _N, K_1, K_N can be coordinated by selecting cycle phasing and duration of said kilns MSVK, MSVK _1, MSVK _2, MSVK _N, K_1, K_N. Advantageously, the CPU purification unit is continuously fed with either the exhaust gas 40 from one or more of the buffers 910, the exhaust gas 40 from the storage tank 920, the exhaust gas 40 from the MSVK kiln, the one or more additional kilns MSVK _1, MSVK_2, MSVK_N, K_1, K_N or a combination of them.

Advantageously, the at least one fuel 20 used in a MSVK kiln according to the invention, in particular in any of the previous embodiments is either carbon-containing fuel or dihydrogen-containing fuel or a mixture of them. A typical fuel can be either wood, coal, peat, dung, coke, charcoal, petroleum, diesel, gasoline, kerosene, LPG, coal tar, naphtha, ethanol, natural gas, hydrogen, propane, methane, coal gas, water gas, blast furnace gas, coke oven gas, CNG or any combination of them. Furthermore, the MVSK kiln can use, for instance, two sources of fuel with different compositions.

Advantageously, the decarbonated materials 50 produced in a MSVK kiln according to the invention, in particular in any of the previous embodiments have a residual $CO_2$ <5%, preferably <2%, resulting from the rapid cooling of the decarbonated materials 50.

Preferably, measures are undertaken to recover heat from the one or more cooling streams 91, 92, and/or the recirculated exhaust gas 40.

Advantageously, the combustion of at least one fuel 20 with the at least one comburent 30 is under an oxygen-to-fuel equivalence ratio greater or equal to 0.9.

Preferably, the cooling air flow capacity, namely the one or more cooling stream 91, 92 is significantly increased in order to reduce the duration of the cooling phase, namely the phase during which the decarbonated materials 50 in at least the first 100, the second 200 and/or the third 300 shaft are cooled with the one or more cooling streams 91, 92 while a supply of the fuel 20 in each shaft (100, 200, 300) is stopped.

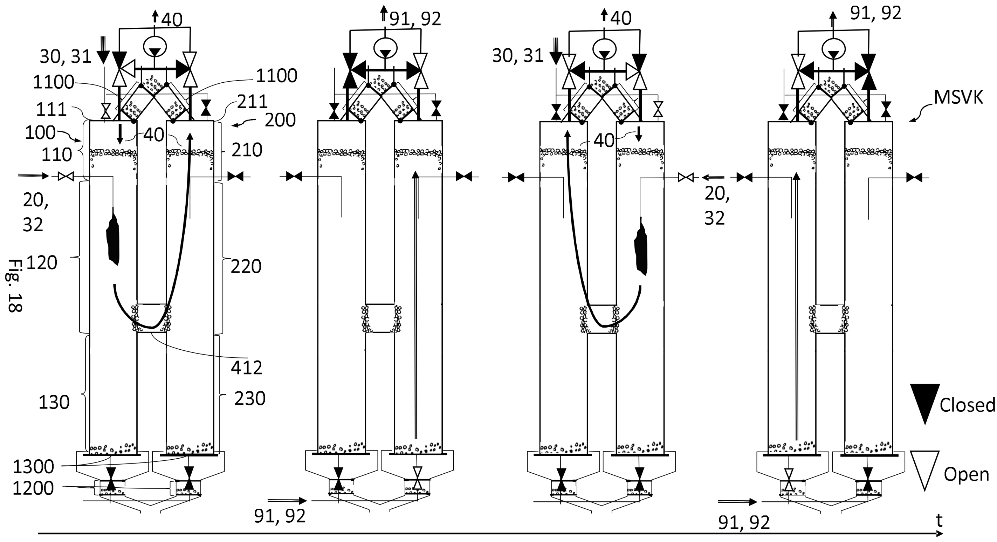

Figure 18 shows a further embodiment according to the invention, which differs from the first embodiment in that the MSVK comprises feeding and discharging systems 1100, 1200, respectively, for the feeding of carbonated materials 10 and the discharge of the decarbonated material 50, in order to minimize the idle time between cycles (reversal time) to reduce or even eliminate the need for exhaust gas buffering before the $CO_2$ purification unit (CPU). The feeding and discharge systems 1100, 1200, with for instance an upstream gas-tight flap valve and a downstream gas-tight flap valve can be integrated to anyone of the previously mentioned embodiment. The lock chamber delimited by a gas-tight flap valve and a downstream gas-tight flap valve presents a working volume adapted to store the material batches to be fed into or discharged from the corresponding shaft 100, 200. By gas-tight, is meant a valve assembly that substantially limits the gas exchanges to as to ensure an efficient usage of the kiln and minimize combustion gas leakage into the atmosphere.

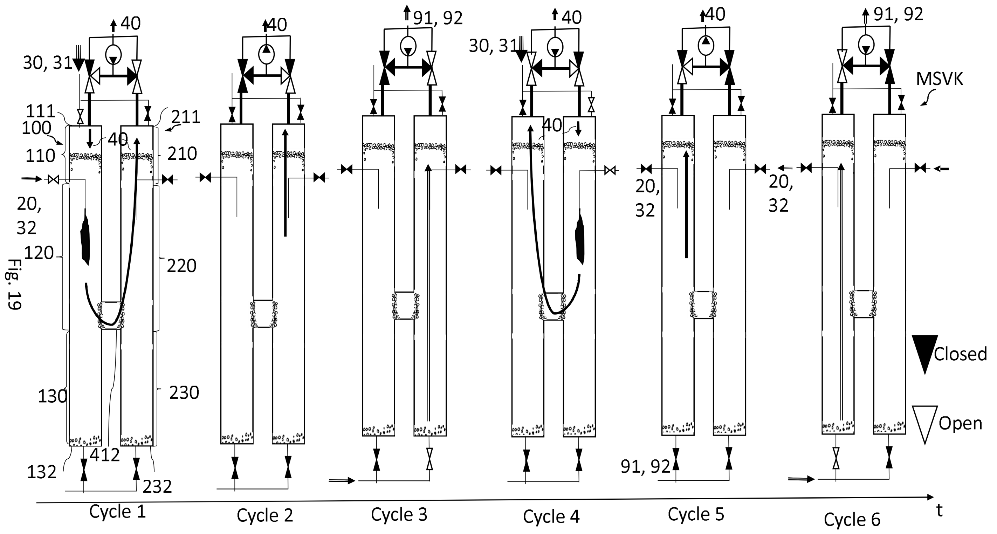

Figure 19 shows a further embodiment in which a MSVK is depressurized (e.g. cycle 2 and cycle 5) between a given heating cycle (e.g. cycle 1 and cycle 4) and its subsequent cooling cycle (e.g. cycle 3 and cycle 6). The effect of this measure is that the equilibrium of Equation 1 is shifted to the right according to Le Chatelier's principle, thereby enhancing the release of $CO_2$ from heated carbonated materials 10, in particular in the heating zones 120, 220 of the first shaft 100 and second 200 shaft. Furthermore, this measure allows to pump the $CO_2$ already present in the MSVK, for instance in the space between the pebbles of the carbonated 10 and decarbonated 50 materials at the start of the depressurization. Consequently, during the subsequent cooling phase, the extraction of $CO_2$ present in combustion zones 120, 220 by the cooling streams 91 is minimized, because a large amount of the extractable $CO_2$ had been already extracted during the vacuum phase (e.g. cycle 2 and cycle 5). Thus, the concentration of $CO_2$ contained in the heated cooling streams 91 can be reduced. Preferably, the shafts 100, 200 are depressurized down to reach a level comprised in the range 1 to 600 mbars, in particular 500 mbars, under the atmospheric pressure. In particular, the predetermined time period amounts to at least 1 minutes, in particular at least 2 minutes, notably less than 10 minutes.

In Figure 19, the depressurization is ensured by a reversible (bidirectional) pump that is also used for recycling the exhaust gas 40 into the shafts 100, 200 during their combustion. In an alternative embodiment (not shown), a dedicated pump can be foreseen for the depressurization of the MSVK besides a pump dedicated to the recycling of the exhaust gas 40. Such a depressurization pump can be arranged in parallel to the exhaust recycling pump or in a separate passage connected to the MSVK.

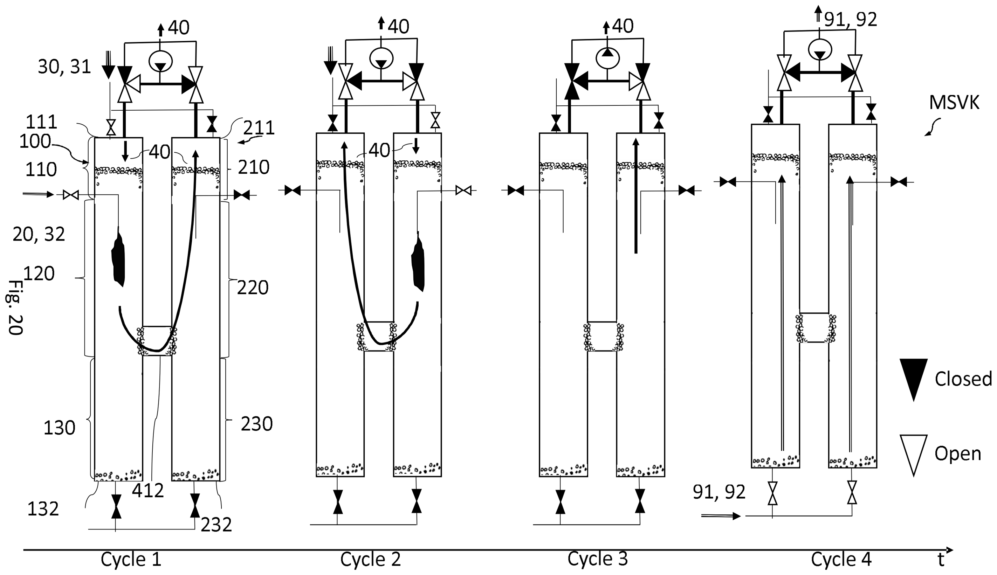

Equally, other sequences as those presented in paragraph 39 can be foreseen such as H1R2, R1H2, V1V2 (Vacuum phase),C1C2,..., as shown in Figure 20. In the embodiment shown in Fig. 20, two heating phases (cycle 1 and cycle 2) in the first and then second shaft 100, 200 precede a simultaneous cooling phase (cycle 4) of the first 100 and second 200 shafts. It should be noted that a vacuum phase (cycle 3) takes place before the cooling phase (cycle 4) in this embodiment. In an alternative embodiment, the vacuum phase can be skipped. Thanks to this measure, the temperature distributions in the first 100 and the second shaft remain substantially equivalent, thereby a substantially even cooling of the first 100 and second 200 shaft is achieved.

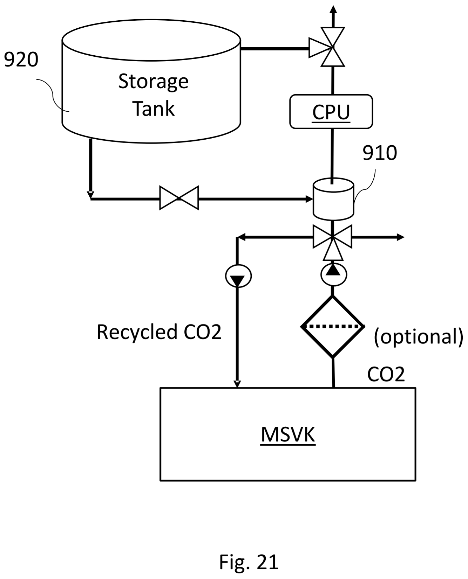

Figure 21 shows a modified version of the fifteenth embodiment of the present invention. In Figure 21, the buffer 910 is directly supplied with $CO_2$ stored in the storage tank 920. With this measure, any pressure loss in the buffer 910 can be rapidly compensated.

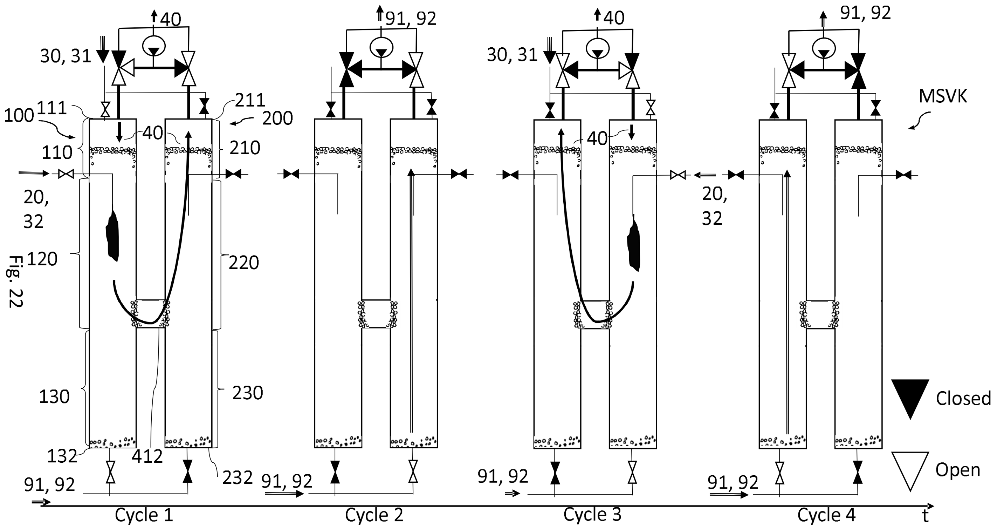

Figure 22 shows an alternative to the embodiment shown in Figure 1A. In Figure 1A, the cooling stream 91 in the first 100 and the second 200 shaft are both stopped during the heating cycles C1 and C3.

In Figure 22, the cooling stream 91 in the first 100 shaft and the second shaft during the heating cycles C1 and C3 is controlled (e.g. via a pump or valve opening) in such a manner the $O_2$ amount fed via the cooling stream 91 during cycles C1 and C3 does not exceed 20%, preferably 10%, in weight the $O_2$ amount fed in the first shaft 100 and the second shaft 200 during cycles C1 and C3, respectively. The $O_2$ amount in the first shaft 100 and the second shaft 200 is fed via both a primary comburent supply means and a secondary comburent supply means (e.g. air cooling stream 91 directly introduced in the lower portion of the cooling zones 132, 232). In cycle C1, only the first shaft 100 is supplied with a limited cooling stream 91. In an alternative or complementary embodiment (not shown), the second shaft could be supplied with a limited cooling stream during cycle C1. This teaching is transposable to cycle C3, where the combustion takes place in the second shaft 200.

By primary comburent supply means, is meant any comburent supply passages feeding a MSVK other than the passages used for supplying the Oxygen containing cooling streams 91 directly in the MSVK. In particular, the primary comburent supply means comprise comburent passage opening in the preheating zones 110, 210, 310 and/or heating zones 120, 220, 320. The primary comburent supply means comprise at least one of:

- first passages arranged at an upper portion of the MSVK dedicated for supplying a first comburent 30, 31,
- second passages dedicated for supplying fuel 20 and the second comburent 32,
- third passages dedicated for supplying the recycled exhaust gas 40 and a first comburent 30, 31, or

- any combination thereof.

The measure illustrated in Figure 22 allows an use of the MSVK in which the $CO_2$ purity level required in the exhaust gas, permits a limited $N_2$ dilution. Furthermore, this measure allows cooling adjustments of the decarbonated materials 50 in the lower portion of the cooling zones 130, 230.

Complementary to any of the previous embodiments, at least one air separation unit ASU is provided in the proximity of the MSVK and optionally one or more additional kilns. The one or more ASU generate an Oxygen-enriched composition that can be fed in the MSVK and optionally in at least one another kiln as comburent 30, 31, 32. An ASU also produces a Nitrogen-enriched composition that can be released in the atmosphere.

Typically, an ASU produces both an Oxygen-enriched composition comprising at least 70% (dry volume) $O_2$, preferably at least 90% (dry volume), in particular 95% and a Nitrogen-enriched composition comprising at least 80% (dry volume) $N_2$ preferably at least 90% (dry volume), in particular at least 95% (dry volume) and less than 19% (dry volume) $O_2$, preferably less than 15% (dry volume), in particular less than 10% (dry volume).

Preferably, the comburent 30, 31, 32 fed in the MSVK via the primary comburent means comprises at least 40% (dry volume), preferably at least 70% (dry volume), in particular at least 90% (dry volume) of the Oxygen-enriched composition.

Complementary to the embodiment according to Figure 22, the Nitrogen-enriched composition can be advantageously used to cool the MSVK during the heating cycles. Indeed, on one hand, the supply of comburent 30, 31, 32 fed via the primary comburent supply means is adjusted so that a near stoichiometric combustion is achieved in the MSVK in the combustion zones 120, 220 of the MSVK, on the other, the cooling stream 91 comprising at least 80% (dry volume), preferably at least 90% (dry volume), in particular least 95% (dry volume) of said Nitrogen-enriched composition is expected to dilute the exhaust gas 40. The amount of residual Oxygen present in the nitrogen-enriched composition is however sufficiently low to the extent that it dilutes the exhaust gas 40 without changing significantly the overall stoichiometric balance. A reduction in the amount of oxygen introduced via the cooling stream 91 will improve the purification efficiency of the CPU.

The comburent comprises less than 70% N2 (dry volume), in particular less than 50% of N2 (dry volume), in particular oxygen-enriched air. In particular, the comburent used in the invention, is a mixture of air with a substantially pure oxygen, the comburent comprising at least 50% $O_2$ (dry volume), preferably more that 80% $O_2$ (dry volume).

The meaning of "substantially pure oxygen" in the present disclosure is an oxygen gas comprising at least 90 % (dry volume) dioxygen (i.e. $O_2$), preferably at least 95% (dry volume) dioxygen(i.e. $O_2$).

Tests were conducted for a kiln according to the first embodiment of the present invention with the following parameters:

| | Comparative example<br>PFRK under state of the art operation with dry coal (around 370T/day) | Example according to the invention<br>MSVK (i.e. PFRK) under "intermittent flush" with dry coal (around 260T/day) without recirculation and with comburent = air (1st embodiment) |
|---|---|---|
| Cycle time | 1033 sec (including reversal ) | 1654 sec (heating and cooling phases) |
| Duration burning time (solid fuel) | 879 sec | 829 sec (heating phase) |
| Duration cooling time | 879 sec | 672 sec (cooling phase) |
| $CO_2$ concentration during heating phase | | 32% (wet volume) |
| $CO_2$ concentration during cooling phase | | 17% (wet volume) |
| $CO_2$ concentration during simultaneous cooling and heating phase | 25% (wet volume) | |

The example shows that the $CO_2$ concentration (wet volume) in the exhaust gas exiting the kiln during the heating phase is increased by 7% (absolute) at the end of the cycle because of no dilution with cooling air. With $N_2$ depleted comburent, it is expected to reach $CO_2$ concentration up to 90% (dry basis) in comparison to the traditionally PRFK.

The meaning of "multi vertical-shaft kiln" in the present disclosure is a kiln comprising at least two shafts 100, 200, 300. The shafts 100, 200, 300 are not coaxial and are disposed side by side to the extent that any shaft of a group consisting of the first and second, and optimally the third shaft 100, 200, 300 is not encircled by the other or another shaft 100, 200, 300 of said group. In other words, the cross-over channel(s) 412, 423, 431 are arranged outside the shafts 100, 200, 300. This definition excludes a annular-shaft kiln in case it were interpreted as being a multi vertical-shaft kiln. A parallel-flow regenerative kiln is a specific form of a multi vertical-shaft kiln in the present definition. The multi vertical-shaft kiln of the first to the sixteenth embodiment falls under the definition of a parallel-flow regenerative kiln (in German: *"Gleich Gegenstrom Regernativ Ofen"*). According to the invention, the term "vertical" in "multi vertical-shaft kiln" does not necessarily require that the longitudinal axes of the shafts 100, 200, 300 have an exact vertical orientation. Rather, an exact vertical directional component of the alignment should be sufficient, with regard to an advantageous gravity-related transport of the material in the shafts, an angle between the actual alignment and the exact vertical alignment amounts to at most 30°, preferably at most 15° and particularly preferably of 0° (exactly vertical alignment).

Each shaft 100, 200, 300 of the multi-shaft vertical kiln comprises a preheating zone 110, 210, 310, a heating zone 120, 220, 320 and a cooling zone 130, 230, 330. A cross-over channel 412, 423, 431 is disposed between each shaft 100, 200, 200. According to the present disclosure, the junction between the heating zones 120, 220, 320 and the cooling zones 130, 230, 330 is substantially aligned with the lower end of the cross-over channel(s) 412, 423, 431.

By lower portion of an element is meant that the fluid is introduced at an elevation from the lower end of said element not exceeding 50 percent of the total height of said element, in particular the fluid being introduced at the lower end.

By upper portion of an element is meant that the fluid is introduced at an elevation from the upper end of said element not exceeding 50 percent of the total height of said element, in particular the fluid being introduced at the upper end.

The present disclosure presents a multi-shaft vertical kiln with two or three shafts. The present teaching also applies to multi-shaft vertical kiln with four and more shafts.

In particular, one or more aspects and features of the invention are set out below in one or more of the enumerated clauses presented hereinafter:

**Clause 1.** Decarbonation process of carbonated materials (10), in particular limestone and dolomitic limestone, preferably with $CO_2$ recovery, in a multi-shaft vertical kiln (MSVK) comprising a first (100), a second (200), and optionally a third (300) shaft with preheating zones (110, 210, 310), heating zones (120, 220, 320) and cooling zones (130, 230, 330) and a cross-over (412, 423, 431) channel between each shaft (100, 200, 300), alternately heating carbonated materials (10) by a combustion of at least one fuel (20) with at least one comburent (30, 31, 32) up to a temperature range in which carbon dioxide of the carbonated materials (10) is released, the combustion of the fuel (20) and the decarbonatation generating an exhaust gas (40), the decarbonated materials (50) being cooled in the cooling zones (130, 230, 330) with one or more cooling streams (91, 92), wherein a mixing between the exhaust gas (40) and the one or more cooling streams (91, 92) is minimized by operating said kiln in a mode in which between two subsequent alternating heating cycles between the first (100) and the second (200) or the third (300) shaft, the decarbonated materials (50) in at least the first (100), the second (200) and/or the third (300) shaft are cooled with the one or more cooling streams (91, 92) while a supply of the fuel (20) in each shaft (100, 200, 300) is stopped.

**Clause 2.** Process according to Clause 1, wherein the feeding of the one or more cooling streams (91, 92) in the first (100), the second (200) or third (300) shaft is stopped, during the two subsequent alternating heating cycles.

**Clause 3.** Process according to Clause 1, wherein a portion of the at least one comburent (30, 31, 32) is fed via the one or more cooling streams (91) during the two subsequent alternating heating cycles.

**Clause 4.** Process according to Clause 3, wherein the feeding of the one or more cooling streams (91) in at least the first (100), the second (200) and/or the third (300) shaft during said two subsequent alternating heating cycles is controlled in such a manner that the $O_2$ amount fed in the first shaft (100) and the second (200) or third (300) shaft via the one or more cooling streams (91) during said two subsequent alternating heating cycles does not exceed 20%, preferably 10%, in weight the $O_2$ amount fed in the first shaft (100) and the second (200) or third (300) shaft during said two subsequent alternating heating cycles.

**Clause 5.** Process according to any of the preceding clauses , wherein the feeding of the at least one comburent (30, 31, 32) in the preheating zones (110, 210, 310) and/or heating zones (120, 220, 320) is stopped while the decarbonated materials (50) in at least the first (100), the second (200) and/or the third (300) shaft are cooled with the one or more cooling streams (91, 92) while the supply of the fuel (20) is stopped in each shaft (100, 200, 300).

**Clause 6.** Process according to any of the preceding clauses, wherein the at least one comburent comprises less than

70% N$_2$ (dry volume), in particular less than 50% of N$_2$ (dry volume), in particular said comburent being oxygen-enriched air or substantially pure oxygen.

**Clause 7.** Process according to any of the preceding clauses, further comprising recirculating the exhaust gas (40) alternately exiting the second (200) or the first (100) shaft, to the first (100) or second (200) shaft, respectively, preferably by means of a positive displacement fan or blower.

**Clause 8.** Process according to any of the preceding clauses, further comprising pressurizing the exhaust gas (40) extracted from the multi-shaft vertical kiln (MSVK) before being fed to the buffer (910) by means of one or more compressors.

**Clause 9.** Process according to any of the preceding clauses, further cooling the decarbonated materials (50) wherein the one or more cooling streams (92) comprise a water steam stream, said stream being fed in the cooling zone (130, 230, 330) of at least the first (100), the second (200) and/or the third (300) shaft.

**Clause 10.** Process according to any of the preceding clauses, further comprising providing a heat exchanger (133, 233, 333) in the cooling zone (130, 230, 330) of at least the first, the second and/or the third shaft (100, 200, 300) for the cooling of the decarbonated materials (50), said heat exchangers (133, 233, 333) being fed by the one or more cooling streams (91, 92).

**Clause 11.** Process according to any of the preceding clauses, further comprising feeding the cooling zone (130, 230, 330) of at least the first, the second and/or the third shaft with the one or more cooling streams (91) and extracting at least the one or more heated cooling streams (91, 92) at an upper portion (131, 231, 331) of said cooling zone (130, 230, 330) and/or from the (412) or at least one of the cross-over channels (412, 423, 431).

**Clause 12.** Process according to any of the preceding clauses, comprising at least two consecutive of the following cycles, preferably the following sequential cycles:

C1) heating the carbonated materials (10) in the heating zone (120) of the first shaft (100) while:

- transferring the generated exhaust gas (40) to the second shaft (200), and optionally the third shaft (300), via the corresponding cross-over channel (412, 431) and
- optionally cooling the decarbonated materials (50) in at least the first (100) and/or the second (200) shaft, and optionally the third (300) shaft;

C2) cooling the decarbonated materials (50) in at least the first (100) and/or the second (200) shaft, and optionally the third (300) shaft, while the fuel (20) supply and optionally the at least one comburent (30, 31, 32) in the preheating zones (110, 210, 310) and/or heating zones (120, 220, 320) is stopped;

C3) heating the carbonated materials (10) in the heating zone (220) of the second shaft (200) while:

- transferring the generated exhaust gas (40) to the first (100), and optionally the third (300) shaft, via the corresponding cross-over channel (412, 423) and

- optionally cooling the decarbonated materials (50) in at least the first (100) and/or the second (200) shaft, and optionally the third (300) shaft;

C4) cooling the decarbonated materials (50) in at least the first (100) and/or the second (200) shaft, and optionally the third (300) shaft while the fuel supply (20) and optionally the at least one comburent (30, 31, 32) supply in the preheating zones (110, 210, 310) and/or heating zones (120, 220, 320) is stopped.

**Clause 13.** Process according to any of the preceding clauses, further comprising at least one of the following steps, preferably the following sequential cycles (C5, C6) being consecutive to cycle C4:

C5) heating the carbonated materials (10) in the heating zone (320) of the third shaft (300) while:

- transferring the exhaust gas (40) generated to the first (100) and/or second (200) shaft, via the corresponding cross-over channel (431, 423) and

- optionally cooling the decarbonated materials (50) in at least the first (100) and/or the second (200) shaft, and optionally the third (300) shaft;

C6) cooling the decarbonated materials (50) in at least the first (100), the second (200) and/or the third (300) shaft while the fuel (20) supply and optionally the at least one comburent (30, 31, 32) supply in the preheating zones (110, 210, 310) and/or heating zones (120, 220, 320) is stopped.

**Clause 14.** Process according to any of the preceding clauses, further comprising at least:

- feeding the first shaft (100) with the fuel (20) and the at least one comburent (30, 31), optionally with the recycled exhaust gas (40) from at least the second shaft (200), the third shaft (300), the buffer (910) and/or the storage tank (920), and

optionally feeding at least the first (100), the second (200) and/or the third (300) shaft with the one or more cooling streams (91) at its or their cooling zone lower portion (132, 232, 332),
in the cycle C1 ;

- feeding either

at least the first (100), the second (200) and/or the third (300) shaft with the one or more cooling streams (91) at its or their cooling zone lower portion (132, 232, 332) while extracting the one or more heated cooling streams (91) at least :

- at its or their preheating zone upper portion (111, 211, 311),

- at its or their cooling zone upper portion (131, 231, 331) and/or

- from the at least one of the cross-over channels (412, 423, 431),

or

at least the first (100), the second (200) and/or the third (300) shaft, preferably the second shaft (200), with the one or more cooling streams (91) at its or their cooling zone lower portion (132, 232, 332) while reinjecting the one or more heated cooling streams (91) extracted at least:

- at its or their cooling zone upper portion (131, 231, 331) and/or

- from the at least one of the cross-over channels (412, 423, 431), preferably the cross-over channel (412) between the first (100) and second (200) shafts,

in a lower portion (112, 212, 312) of the preheating zone (110, 210, 310) of at least the first (100), the second (200) and/or the third (300) shaft, preferably the second shaft (200) in particular by means of a collecting ring,

in cycle C2;

- feeding the second shaft (200) with the fuel (20) and the at least one comburent (30, 31), optionally with the recycled exhaust gas (40) from at least the first shaft (100), the third shaft (300), the buffer (910) and/or the storage tank (920), and
optionally feeding at least the first (100), the second (200) and/or the third (300) shaft with the one or more cooling streams (91) at its or their cooling zone lower portion (132, 232, 332),
in cycle C3;

- feeding either

at least the first (100), the second (200) and/or the third (300) shaft with the one or more cooling streams (91) at its or their cooling zone lower portion (132, 232, 332) while extracting the one or more heated cooling streams (91) at least:

- at its or their preheating zone upper portion (111, 211, 311),

- at its or their cooling zone upper portion (131, 231, 331) and/or

- from the at least one of the cross-over channels (412, 423, 431),

or

at least the first (100), the second (200) and/or the third (300) shaft, preferably the first shaft (100) with the one or more cooling streams (91) at its or their cooling zone lower portion (132, 232, 332) while reinjecting the one or more heated cooling streams (91) extracted at least:

- at its or their cooling zone upper portion (131, 231, 331) and/or

- from the at least one of the cross-over channels (412, 423, 431), preferably the cross-over channel (412) between the first (100) and second (200) shafts,

in a lower portion (112, 212, 312) of the preheating zone (110) of at least the first (100), the second (200) and/or the third (300) shaft, preferably the first shaft (100), in particular by means of a collecting ring,

in cycle C4.

**Clause 15.** Process according to Clause 13, further comprising at least one of the following steps:

- feeding the third shaft with the fuel (20) and the at least one comburent (30, 31), optionally with the recycled exhaust gas (40) from at least the first shaft (100), the second shaft (200), the buffer (910) and/or the storage tank (920), and

    optionally feeding at least the first (100), the second (200) and/or the third (300) shaft with the one or more cooling streams (91) at its or their cooling zone lower portion (132, 232, 332),

    in cycle C5;

- feeding either at least the first (100), the second (200) and/or the third (300) shaft with the one or more streams (91) at its or their cooling zone lower portion while extracting the one or more heated cooling streams (91) at least:

    - at its or their preheating zone upper portion (111, 211, 311),

    - at its or their cooling zone upper portion (131, 231, 331) and/or

    - from the at least one of the cross-over channels (412, 423, 431),
    or

    at least the first (100), the second (200) and/or the third (300) shaft with the one or more cooling streams (91) at its or their cooling zone lower portion (132, 232, 332) while reinjecting the one or more heated cooling streams (91) extracted at least:

    - at its or their cooling zone upper portion (131, 231, 331) and/or

    - from the at least one of the cross-over channels (412, 423, 431),

    in a lower portion (112,212,312) of the preheating zone (110,210,310) of at least the first (100), the second (200) and/or the third (300) shaft, in particular by means of a collecting ring,

    in cycle C6.

**Clause 16.** Process according to any of the preceding clauses, wherein the mass flow of the one or more cooling streams (91,92) supplied during at least one of the cycle C2, C4 and/or C6, is set up so that it represents at least 90%, preferably 100% of the maximal mass flow of the one or more cooling streams (91,92), said maximal mass flow corresponding to the maximal pressure that any of the shafts (100, 200, 300) is capable to sustain, preferably said pressure is comprised in the range 300 to 600 mbars, preferably 450 mbars, over the atmospheric pressure.

**Clause 17.** Process according to any of the preceding clauses, further comprising between the two subsequent alternating heating cycles in the first (100) and the second (200) or the third (300) shaft, depressurizing the first (100) and the second (200) and optionally the third (300) shaft for a predetermined time period before the decarbonated materials (50) in at least the first (100), the second (200) and/or the third (300) shaft are cooled with the one or more cooling streams (91, 92) while the supply of the fuel (20) and optionally the at least one comburent (30, 31, 32) in each shaft (100, 200, 300) is stopped, **preferably** the first (100) and the second (200) and optionally the third (300) shaft are depressurized down to reach a level comprised in the range of 1 to 600 mbars, preferably 500 mbars, under the atmospheric pressure.

**Clause 18.** Process according to any of the preceding clauses, wherein the first alternating heating cycle of the two subsequent alternating heating cycles in the first (100) and the second (200) or the third (300) shaft is performed directly after a preceding alternating heating cycle in the second (200) or third shaft (300), without a cooling cycle therebetween, in which the supply of the fuel (20) and optionally the at least one comburent (30, 31, 32) in each shaft (100, 200, 300) is stopped and/or the decarbonated materials (50) in at least the first (100), the second (200) and/or the third (300) shaft are cooled with the one or more cooling streams (91, 92).

**Clause 19.** Process according to any of the preceding clauses, comprising feeding the carbonated materials (10) into and/or discharging the decarbonated materials (50) form at least one of the first, second and/or third shaft (100, 200, 300), via a feeding and/or discharging system (1100, 1200), respectively, each system (1100, 200) comprising a lock chamber delimited by an upstream valve assembly and a downstream valve assembly, said feeding or discharging system (1100, 1200) being configured to collect the carbonated (10) or decarbonated materials (50), respectively, while the upstream valve assembly is open and the downstream valve assembly is closed, to store in a substantially gas tight manner the carbonated (10) or decarbonated materials (50), respectively, while both the upstream and downstream valve assemblies are closed, and to release the carbonated (10) or decarbonated materials (50), respectively, while the upstream valve assembly is closed and the downstream valve assembly is open.

**Clause 20.** Process according to any of the preceding clauses, providing one or more additional kilns (MSVK _1, MSVK _2, MSVK _N, K_1, K_N) to the multi-shaft vertical kiln (MSVK), forming a plurality of kilns generating an aggregated exhaust gas stream, so as to minimize flow variation of the aggregated exhaust gas stream entering a $CO_2$ purification unit (CPU), in particular coordinating the plurality of kilns by selecting at least one cycle phasing and duration of said kilns.

**Clause 21.** Process according to any of the preceding clauses, wherein the $CO_2$ purification unit (CPU) is continuously fed with either the exhaust gas (40) from the buffer (910), the exhaust gas (40) from the storage tank (920), the exhaust gas (40) from the multi-shaft vertical kiln (MSVK), the one or more additional kilns(MSVK _1, MSVK _2, MSVK _N, K_1, K_N) or a combination of them.

**Clause 22.** Process according to any of the preceding clauses, comprising transferring the $CO_2$ from the storage tank (920) to the buffer (910).

**Clause 23.** Process according to any of the preceding clauses, wherein the fuel (20) used is either carbon-containing fuel or dihydrogen-containing fuel or a mixture of them.

**Clause 24.** Process according to any of the preceding clauses, further comprising boiling liquid $CO_2$ stored in the storage tank (920) to form recycled exhaust gas (40) and transferring said gas (40) to the multi-shaft vertical kiln (MSVK).

**Clause 25.** Process according to any of the preceding clauses further comprising separating air with an air separation unit (ASU) forming an Oxygen-enriched composition comprising at least 70% (dry volume) $O_2$, preferably at least 90% (dry volume), in particular at least 95% and a Nitrogen-enriched composition comprising at least 80% (dry volume) $N_2$ preferably at least 90% (dry volume), in particular at least 95% (dry volume) and less than 19% (dry volume) $O_2$, preferably less than 15 % (dry volume), in particular less than 10% (dry volume).

**Clause 26.** Process according to the preceding clause, wherein the at least one comburent (30, 31, 32) supplied in the preheating zones (110, 210, 310) and/or heating zones (120, 220, 320) comprises at least 40% (dry volume), preferably at least 70% (dry volume), in particular at least 90% (dry volume) of the Oxygen-enriched composition.

**Clause 27.** Process according to clause 25 or 26, in combination with clause 3 or 4, wherein the one or more cooling streams (91) fed during the two subsequent alternating heating cycles comprise at least 80% (dry volume), preferably at least 90% (dry volume), in particular at least 95% (dry volume) of said Nitrogen-enriched composition, said stream being fed in the cooling zone (130, 230, 330) of at least the first (100), the second (200) and/or the third (300) shaft.

Although the present invention has been described and illustrated in details, it is understood that the same is by way of illustration and example only and is not to be taken by way of limitation, the scope of the present invention being limited only by the terms of the appended claims.

**Claims**

1. Decarbonation process of carbonated materials (10), in particular limestone and dolomitic limestone, preferably with $CO_2$ recovery, in a multi-shaft vertical kiln (MSVK) comprising a first (100), a second (200), and optionally a third (300) shaft with preheating zones (110, 210, 310), heating zones (120, 220, 320) and cooling zones (130, 230, 330) and a cross-over (412, 423, 431) channel between each shaft (100, 200, 300), alternately heating carbonated materials (10) by a combustion of at least one fuel (20) with at least one comburent (30, 31, 32) up to a temperature range in which carbon dioxide of the carbonated materials (10) is released, the combustion of the fuel (20) and the decarbonatation generating an exhaust gas (40), the decarbonated materials (50) being cooled in the cooling zones (130, 230, 330) with one or more cooling streams (91, 92), wherein a mixing between the exhaust gas (40) and the one or more cooling streams (91, 92) is minimized by operating said kiln in a mode in which between two subsequent alternating heating cycles between the first (100) and the second (200) or the third (300) shaft, the decarbonated materials (50) in at least the first (100), the second (200) and/or the third (300) shaft are cooled with the one or more cooling streams (91, 92) while a supply of the fuel (20) in each shaft (100, 200, 300) is stopped.

2. Process according to Claim 1, wherein the feeding of the one or more cooling streams (91, 92) in the first (100), the second (200) or third (300) shaft is stopped, during the two subsequent alternating heating cycles.

3. Process according to Claim 1, wherein a portion of the at least one comburent (30, 31, 32) is fed via the one or more cooling streams (91) during the two subsequent alternating heating cycles, preferably wherein the feeding of the one or more cooling streams (91) in at least the first (100), the second (200) and/or the third (300) shaft during said two subsequent alternating heating cycles is controlled in such a manner that the $O_2$ amount fed in the first shaft (100) and the second (200) or third (300) shaft via the one or more cooling streams (91) during said two subsequent alternating heating cycles does not exceed 20%, preferably 10%, in weight the $O_2$ amount fed in the first shaft (100) and the second (200) or third (300) shaft during said two subsequent alternating heating cycles.

4. Process according to any of the preceding claims, wherein the feeding of the at least one comburent (30, 31, 32) in the preheating zones (110, 210, 310) and/or heating zones (120, 220, 320) is stopped while the decarbonated materials (50) in at least the first (100), the second (200) and/or the third (300) shaft are cooled with the one or more cooling streams (91, 92) while the supply of the fuel (20) is stopped in each shaft (100, 200, 300).

5. Process according to any of the preceding claims, wherein the at least one comburent comprises less than 70% $N_2$ (dry volume), in particular less than 50% of $N_2$ (dry volume), in particular said comburent being oxygen-enriched air or substantially pure oxygen.

6. Process according to any of the preceding claims, further comprising recirculating the exhaust gas (40) alternately exiting the second (200) or the first (100) shaft, to the first (100) or second (200) shaft, respectively, preferably by means of a positive displacement fan or blower.

7. Process according to any of the preceding claims, further comprising pressurizing the exhaust gas (40) extracted from the multi-shaft vertical kiln (MSVK) before being fed to the buffer (910) by means of one or more compressors.

8. Process according to any of the preceding claims, further comprising feeding the cooling zone (130, 230, 330) of at least the first, the second and/or the third shaft with the one or more cooling streams (91) and extracting at least the one or more heated cooling streams (91, 92) at an upper portion (131, 231, 331) of said cooling zone (130, 230, 330) and/or from the (412) or at least one of the cross-over channels (412, 423, 431).

9. Process according to any of Claims 1 to 6 or 8, preferably in combination with Claim 7, comprising at least two consecutive of the following cycles, preferably the following sequential cycles:

C1) heating the carbonated materials (10) in the heating zone (120) of the first shaft (100) while:

- transferring the generated exhaust gas (40) to the second shaft (200), and optionally the third shaft (300), via the corresponding cross-over channel (412, 431) and
- optionally cooling the decarbonated materials (50) in at least the first (100) and/or the second (200) shaft, and optionally the third (300) shaft;

C2) cooling the decarbonated materials (50) in at least the first (100) and/or the second (200) shaft, and optionally the third (300) shaft, while the fuel (20) supply and optionally the at least one comburent (30, 31, 32) in the preheating zones (110, 210, 310) and/or heating zones (120, 220, 320) is stopped;
C3) heating the carbonated materials (10) in the heating zone (220) of the second shaft (200) while:

- transferring the generated exhaust gas (40) to the first (100), and optionally the third (300) shaft, via the corresponding cross-over channel (412, 423) and
- optionally cooling the decarbonated materials (50) in at least the first (100) and/or the second (200) shaft, and optionally the third (300) shaft;

C4) cooling the decarbonated materials (50) in at least the first (100) and/or the second (200) shaft, and optionally the third (300) shaft while the fuel supply (20) and optionally the at least one comburent (30, 31, 32) supply in the preheating zones (110, 210, 310) and/or heating zones (120, 220, 320) is stopped;
and optionally said process further comprising at least one of the following steps, preferably the following sequential cycles (C5, C6) being consecutive to cycle C4:
C5) heating the carbonated materials (10) in the heating zone (320) of the third shaft (300) while:

- transferring the exhaust gas (40) generated to the first (100) and/or second (200) shaft, via the corresponding cross-over channel (431, 423) and
- optionally cooling the decarbonated materials (50) in at least the first (100) and/or the second (200) shaft, and optionally the third (300) shaft;

C6) cooling the decarbonated materials (50) in at least the first (100), the second (200) and/or the third (300) shaft while the fuel (20) supply and optionally the at least one comburent (30, 31, 32) supply in the preheating zones (110, 210, 310) and/or heating zones (120, 220, 320) is stopped.

10. Process according to Claim 9, further comprising at least:

- feeding the first shaft (100) with the fuel (20) and the at least one comburent (30, 31), optionally with the recycled exhaust gas (40) from at least the second shaft (200), the third shaft (300) and/or the buffer (910), and optionally feeding at least the first (100), the second (200) and/or the third (300) shaft with the one or more cooling streams (91) at its or their cooling zone lower portion (132, 232, 332),
in the cycle C1 ;
- feeding either

at least the first (100), the second (200) and/or the third (300) shaft with the one or more cooling streams (91) at its or their cooling zone lower portion (132, 232, 332) while extracting the one or more heated cooling streams (91) at least :

- at its or their preheating zone upper portion (111, 211, 311),
- at its or their cooling zone upper portion (131, 231, 331) and/or
- from the at least one of the cross-over channels (412, 423, 431),

or

at least the first (100), the second (200) and/or the third (300) shaft, preferably the second shaft (200), with the one or more cooling streams (91) at its or their cooling zone lower portion (132, 232, 332) while reinjecting the one or more heated cooling streams (91) extracted at least:

- at its or their cooling zone upper portion (131, 231, 331) and/or
- from the at least one of the cross-over channels (412, 423, 431), preferably the cross-over channel (412) between the first (100) and second (200) shafts,

in a lower portion (112, 212, 312) of the preheating zone (110, 210, 310) of at least the first (100), the second (200) and/or the third (300) shaft, preferably the second shaft (200) in particular by means of a collecting ring,

in cycle C2;
- feeding the second shaft (200) with the fuel (20) and the at least one comburent (30, 31), optionally with the recycled exhaust gas (40) from at least the first shaft (100), the third shaft (300) and/or the buffer (910), and optionally feeding at least the first (100), the second (200) and/or the third (300) shaft with the one or more cooling streams (91) at its or their cooling zone lower portion (132, 232, 332),
in cycle C3;
- feeding either

at least the first (100), the second (200) and/or the third (300) shaft with the one or more cooling streams (91) at its or their cooling zone lower portion (132, 232, 332) while extracting the one or more heated cooling streams (91) at least:

- at its or their preheating zone upper portion (111, 211, 311),
- at its or their cooling zone upper portion (131, 231, 331) and/or
- from the at least one of the cross-over channels (412, 423, 431),

or
at least the first (100), the second (200) and/or the third (300) shaft, preferably the first shaft (100) with the one or more cooling streams (91) at its or their cooling zone lower portion (132, 232, 332) while reinjecting the one or more heated cooling streams (91) extracted at least:

- at its or their cooling zone upper portion (131, 231, 331) and/or
- from the at least one of the cross-over channels (412, 423, 431), preferably the cross-over channel (412) between the first (100) and second (200) shafts,

in a lower portion (112, 212, 312) of the preheating zone (110) of at least the first (100), the second (200) and/or the third (300) shaft, preferably the first shaft (100), in particular by means of a collecting ring,

in cycle C4;
and optionally said process further comprising at least one of the following steps:

- feeding the third shaft with the fuel (20) and the at least one comburent (30, 31), optionally with the recycled exhaust gas (40) from at least the first shaft (100), the second shaft (200) and/or the buffer (910), and

optionally feeding at least the first (100), the second (200) and/or the third (300) shaft with the one or more cooling streams (91) at its or their cooling zone lower portion (132, 232, 332),
in cycle C5;

- feeding either at least the first (100), the second (200) and/or the third (300) shaft with the one or more streams (91) at its or their cooling zone lower portion while extracting the one or more heated cooling streams (91) at least:

- at its or their preheating zone upper portion (111, 211, 311),
- at its or their cooling zone upper portion (131, 231, 331) and/or
- from the at least one of the cross-over channels (412, 423, 431),
or
at least the first (100), the second (200) and/or the third (300) shaft with the one or more cooling streams (91) at its or their cooling zone lower portion (132, 232, 332) while reinjecting the one or more heated cooling streams (91) extracted at least:

- at its or their cooling zone upper portion (131, 231, 331) and/or
- from the at least one of the cross-over channels (412, 423, 431),

in a lower portion (112,212,312) of the preheating zone (110,210,310) of at least the first (100), the second (200) and/or the third (300) shaft, in particular by means of a collecting ring,

in cycle C6.

11. Process according to Claim 9 or 10, wherein the mass flow of the one or more cooling streams (91,92) supplied during at least one of the cycle C2, C4 and/or C6, is set up so that it represents at least 90%, preferably 100% of the maximal mass flow of the one or more cooling streams (91,92), said maximal mass flow corresponding to the maximal pressure that any of the shafts (100, 200, 300) is capable to sustain, preferably said pressure is comprised in the range 300 to 600 mbars, preferably 450 mbars, over the atmospheric pressure.

12. Process according to any of the preceding claims, further comprising between the two subsequent alternating heating cycles in the first (100) and the second (200) or the third (300) shaft, depressurizing the first (100) and the second (200) and optionally the third (300) shaft for a predetermined time period before the decarbonated materials (50) in at least the first (100), the second (200) and/or the third (300) shaft are cooled with the one or more cooling streams (91, 92) while the supply of the fuel (20) and optionally the at least one comburent (30, 31, 32) in each shaft (100, 200, 300) is stopped, **preferably** the first (100) and the second (200) and optionally the third (300) shaft are depressurized down to reach a level comprised in the range of 1 to 600 mbars, preferably 500 mbars, under the atmospheric pressure.

13. Process according to any of the preceding claims, wherein the first alternating heating cycle of the two subsequent alternating heating cycles in the first (100) and the second (200) or the third (300) shaft is performed directly after a preceding alternating heating cycle in the second (200) or third shaft (300), without a cooling cycle therebetween, in which the supply of the fuel (20) and optionally the at least one comburent (30, 31, 32) in each shaft (100, 200, 300) is stopped and/or the decarbonated materials (50) in at least the first (100), the second (200) and/or the third (300) shaft are cooled with the one or more cooling streams (91, 92).

14. Process according to any of the preceding claims, comprising feeding the carbonated materials (10) into and/or discharging the decarbonated materials (50) form at least one of the first, second and/or third shaft (100, 200, 300), via a feeding and/or discharging system (1100, 1200), respectively, each system (1100, 200) comprising a lock chamber delimited by an upstream valve assembly and a downstream valve assembly, said feeding or discharging system (1100, 1200) being configured to collect the carbonated (10) or decarbonated materials (50), respectively, while the upstream valve assembly is open and the downstream valve assembly is closed, to store in a substantially gas tight manner the carbonated (10) or decarbonated materials (50), respectively, while both the upstream and downstream valve assemblies are closed, and to release the carbonated (10) or decarbonated materials (50), respectively, while the upstream valve assembly is closed and the downstream valve assembly is open.

15. Process according to any of the preceding claims in combination with Claim 7, wherein the $CO_2$ purification unit (CPU) is continuously fed with either the exhaust gas from the buffer (910), the exhaust gas (40) from the multi-shaft vertical kiln (MSVK) or a combination of them.

16. Process according to any of the preceding claims further comprising separating air with an air separation unit (ASU) forming an Oxygen-enriched composition comprising at least 70% (dry volume) $O_2$, preferably at least 90% (dry volume), in particular at least 95% and a Nitrogen-enriched composition comprising at least 80% (dry volume) $N_2$ preferably at least 90% (dry volume), in particular at least 95% (dry volume) and less than 19% (dry volume) $O_2$, preferably less than 15 % (dry volume), in particular less than 10% (dry volume), preferably wherein the at least one comburent (30, 31, 32) supplied in the preheating zones (110, 210, 310) and/or heating zones (120, 220, 320) comprises at least 40% (dry volume), preferably at least 70% (dry volume), in particular at least 90% (dry volume) of the Oxygen-enriched composition, preferably wherein the one or more cooling streams (91) fed during the two subsequent alternating heating cycles comprise at least 80% (dry volume), preferably at least 90% (dry volume), in particular at least 95% (dry volume) of said Nitrogen-enriched composition, said stream being fed in the cooling zone (130, 230, 330) of at least the first (100), the second (200) and/or the third (300) shaft.

Fig. 1A

Fig. 1B

Closed

Open

Fig. 2

MSVK

30, 31    40    91, 92    30, 31    40    91, 92

111    211    200
100    40
110    210
20, 32    120    220    20, 32
130    230
132    412    232    91, 92    91, 92

Cycle 1    Cycle 2    Cycle 3    Cycle 4    t

▼ Closed

▽ Open

EP 4 699 995 A1

26

Fig. 3A

MSVK

30, 31

100

110

200

210

20,
32

120

220

131

231

130

412

230

91, 92

▼ Closed

▽ Open

50

91, 92

Fig. 3B

Fig. 4A

Fig. 4B

EP 4 699 995 A1

Fig. 5

EP 4 699 995 A1

MSVK

431

300

423

100

200

412

Fig. 6A

MSVK

40

30, 31

100

40

311

110

310

20,
32

120

320

412  423  431

130

330

132

300

332

91, 92

232  200

▼ Closed

▽ Open

Fig. 6B

Fig.7

Fig. 8

MSVK

30, 31

700

100

200

110

210

20,
32

120

220

800

130

412

92

230

Closed

Open

Fig. 9

MSVK

30, 31

700

100

200

110

210

20,
32

120

220

92

412

233

133

130

230

800

(optional)

Fig. 10

▼ Closed

▽ Open

MSVK

30, 31

100

110

210

10

20,
32

120

220

91, 92

91, 92

91, 92

91, 92

133

412

130

230
233

91, 92

50

91, 92

Closed

Open

Fig. 11

200

Fig. 12

Fig. 13

910

CPU

(optional)

(optional)

(optional)

(optional)

Recycled CO2

CO2

MSVK

Fig. 14

920

Storage
Tank

CPU

910

Recycled CO2

(optional)

(optional)

CO2

MSVK

Fig. 15

920

CPU

K_1, ..N
(optional)

1
N

910

910

910

2

N

MSVK

MSVK 1
(optional)

MSVK N
(optional)

Fig. 16

MSVK

Fig. 17

Fig. 18

Fig. 19

Cycle 1    Cycle 2    Cycle 3    Cycle 4    Cycle 5    Cycle 6

MSVK

▲ Closed

▽ Open

30, 31   40   91, 92   20, 32

211   210   220   230   232   412

111   100   110   120   130   132

t

MSVK

▶ Closed
▷ Open

Cycle 1    Cycle 2    Cycle 3    Cycle 4

91, 92
40

30, 31
111
100
110
20, 32
120
130
132

211
210
220
230
232
412

91, 92

t

Fig. 20

920 Storage Tank

CPU

910

Recycled CO2

(optional)

CO2

MSVK

Fig. 21

Fig. 22

Europäisches
Patentamt

European
Patent Office

Office européen
des brevets

# EUROPEAN SEARCH REPORT

**Application Number**

EP 25 21 0603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANONYMOUS: "The Maerz® Parallel Flow Regenerative Lime Kiln", MAERZ, 2002, pages 1-20, XP055603108, | 1,4,6-14 | INV.<br>C04B2/12<br>F27B1/02<br>F27B1/00 |
| Y | * 3. "The PFR-Kiln"; 5.3. "Air blowers"; 5.4.3. "Coal"; 5.8. "Reversal Device" and 6.1. "Principles and Control Philosophy"; figures 2,3a,3b,4,10,12,14 * | 5,15,16 | |
| Y | US 2020/048146 A1 (WANG CHANGCHUN [CN] ET AL) 13 February 2020 (2020-02-13) * paragraphs [0021] - [0024], [0026], [0083]; claim 6; figures 4-7 * | 15 | |
| Y,D | CN 105 000 811 A (UNIV NORTHEASTERN) 28 October 2015 (2015-10-28) * claims 1-5; figure 1 * | 5,15,16 | |
| Y | EP 3 237 822 B1 (AIR LIQUIDE [FR]; SOC PORTUGUESA DO AR LIQUIDO ARLIQUIDO LDA [PT]) 24 October 2018 (2018-10-24) * paragraphs [0061], [0074] * | 16 | **TECHNICAL FIELDS SEARCHED (IPC)** |
| Y | CN 102 445 054 A (KAIFENG HUANGHE AIRE SEPARATION GROUP CO LTD) 9 May 2012 (2012-05-09) * abstract * | 16 | C04B<br>F27D<br>F27B |
| A | CN 109 437 608 A (YU SONGTAO) 8 March 2019 (2019-03-08) * paragraphs [0005], [0029] - [0033]; claims 1,9; figure 1; examples 1-3 * | 1-16 | |
| A | EP 2 882 694 B1 (QUALICAL INT SRL [IT]) 1 May 2019 (2019-05-01) * the whole document * | 1-16 | |

-/--

The present search report has been drawn up for all claims

| Place of search | Date of completion of the search | Examiner |
|---|---|---|
| Munich | 15 January 2026 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 21 0603

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/176760 A1 (PIRINGER HANNES [CH]) 23 June 2016 (2016-06-23) * the whole document * ----- | 1-16 | |

TECHNICAL FIELDS
SEARCHED (IPC)

The present search report has been drawn up for all claims

| Place of search | Date of completion of the search | Examiner |
|---|---|---|
| Munich | 15 January 2026 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 4 699 995 A1**

## ANNEX TO THE EUROPEAN SEARCH REPORT
## ON EUROPEAN PATENT APPLICATION NO.

EP 25 21 0603

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | | Publication date | Patent family member(s) | | Publication date |
|---|---|---|---|---|---|
| US 2020048146 | A1 | 13-02-2020 | CN | 106892578 A | 27-06-2017 |
| | | | UA | 124401 C2 | 08-09-2021 |
| | | | US | 2020048146 A1 | 13-02-2020 |
| | | | WO | 2018192267 A1 | 25-10-2018 |
| CN 105000811 | A | 28-10-2015 | NONE | | |
| EP 3237822 | B1 | 24-10-2018 | CN | 107407521 A | 28-11-2017 |
| | | | EP | 3037765 A1 | 29-06-2016 |
| | | | EP | 3237822 A1 | 01-11-2017 |
| | | | ES | 2699233 T3 | 08-02-2019 |
| | | | PL | 3237822 T3 | 28-02-2019 |
| | | | PT | 3237822 T | 04-12-2018 |
| | | | US | 2017362122 A1 | 21-12-2017 |
| | | | WO | 2016102709 A1 | 30-06-2016 |
| CN 102445054 | A | 09-05-2012 | NONE | | |
| CN 109437608 | A | 08-03-2019 | NONE | | |
| EP 2882694 | B1 | 01-05-2019 | EP | 2882694 A1 | 17-06-2015 |
| | | | WO | 2014024213 A1 | 13-02-2014 |
| US 2016176760 | A1 | 23-06-2016 | BR | 112016002340 A2 | 01-08-2017 |
| | | | CN | 105452186 A | 30-03-2016 |
| | | | DE | 102013108410 B3 | 06-11-2014 |
| | | | EP | 3030532 A1 | 15-06-2016 |
| | | | JP | 6371392 B2 | 08-08-2018 |
| | | | JP | 2016530201 A | 29-09-2016 |
| | | | MX | 386839 B | 19-03-2025 |
| | | | MY | 172379 A | 21-11-2019 |
| | | | NO | 2911238 T3 | 10-02-2018 |
| | | | PL | 3030532 T3 | 31-08-2018 |
| | | | RU | 2016104622 A | 14-09-2017 |
| | | | TR | 201806988 T4 | 21-06-2018 |
| | | | US | 2016176760 A1 | 23-06-2016 |
| | | | WO | 2015018504 A1 | 12-02-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105000811 B